(19) **Europäisches Patentamt / European Patent Office / Office européen des brevets**

(11) **EP 3 051 845 B1**

(12) **EUROPEAN PATENT SPECIFICATION**

(45) Date of publication and mention of the grant of the patent:
**21.11.2018 Bulletin 2018/47**

(51) Int Cl.:
*H04W 4/00* (2018.01)   *H04B 10/116* (2013.01)
*H04W 4/80* (2018.01)

(21) Application number: **16153029.0**

(22) Date of filing: **27.01.2016**

(54) **COMPUTING DEVICES AND METHODS FOR DATA TRANSMISSION**

RECHNERVORRICHTUNGEN UND VERFAHREN ZUR DATENÜBERTRAGUNG

DISPOSITIFS INFORMATIQUES ET PROCÉDÉS POUR LA TRANSMISSION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2015 US 201514612040**

(43) Date of publication of application:
**03.08.2016 Bulletin 2016/31**

(73) Proprietor: **BlackBerry Limited**
**Waterloo, ON N2K 0A7 (CA)**

(72) Inventors:
- **SIBECAS, Salvador**
  **Sunrise, FL 33323 (US)**
- **EATON, Eric Thomas**
  **Sunrise, FL 33323 (US)**
- **RAMIREZ, Dalier J**
  **Sunrise, FL 33323 (US)**
- **MILLER, Jon Stacey**
  **Sunrise, FL 33323 (US)**
- **DIAZ, Jaime**
  **Sunrise, FL 33323 (US)**

(74) Representative: **Hanna Moore + Curley**
**Garryard House**
**25/26 Earlsfort Terrace**
**Dublin 2, D02 PX51 (IE)**

(56) References cited:
- **Ieee: "IEEE Standard for Local and metropolitan area networks- Part 15.7: Short-Range Wireless Optical Communication Using Visible Light", , 6 September 2011 (2011-09-06), pages 1-309, XP055231023, Retrieved from the Internet: URL:http://standards.ieee.org/getieee802/download/802.15.7-2011.pdf [retrieved on 2015-11-25]**
- **BAO XU ET AL: "Li-Fi: Light fidelity-a survey", WIRELESS NETWORKS, ACM, 2 PENN PLAZA, SUITE 701 - NEW YORK USA, vol. 21, no. 6, 18 January 2015 (2015-01-18), pages 1879-1889, XP035514428, ISSN: 1022-0038, DOI: 10.1007/S11276-015-0889-0 [retrieved on 2015-01-18]**
- **CHEN SHIH-HAO ET AL: "Color-Shift Keying and Code-Division Multiple-Access Transmission for RGB-LED Visible Light Communications Using Mobile Phone Camera", IEEE PHOTONICS JOURNAL, IEEE, USA, vol. 6, no. 6, 1 December 2014 (2014-12-01), pages 1-6, XP011567689, DOI: 10.1109/JPHOT.2014.2374612 [retrieved on 2014-12-11]**
- **TAKUTO KOMIYAMA ET AL: "Study of visible light communication system using RGB LED lights", SICE ANNUAL CONFERENCE (SICE), 2011 PROCEEDINGS OF, IEEE, 13 September 2011 (2011-09-13), pages 1926-1928, XP032064899, ISBN: 978-1-4577-0714-8**

**Description**

FIELD

The embodiments described herein generally relate to devices and methods for transmitting data between computing devices, such as mobile devices.

BACKGROUND

Security of data can be a concern when there is a transfer of data between devices. In particular, unauthorized interception of transferred data may be a concern.

The state of the art is represented by "IEEE Standard for Local and metropolitan area networks - Part 15.7: Short-Range Wireless Optical Communication Using Visible Light", 6th September 2011, pages 1 - 309, and Bao Xu et al: "Li-Fi: Light fidelity-a survey", Wireless Networks, ACM, 2 Penn Plaza, suite 701 - New York USA, vol. 21, no. 6, 18 January 2015, pages 1879-1889.

SUMMARY

The invention is defined by the independent claims. Accordingly the present teaching provides methods and devices as detailed in the claims that follow.

DRAWINGS

For a better understanding of the embodiments described herein and to show more clearly how they may be carried into effect, reference will now be made, by way of example only, to the accompanying drawings which show at least one example embodiment, and in which:

   FIG. 1 is a block diagram of a mobile device having a camera unit in one example embodiment;

   FIG. 2 is a block diagram of an example embodiment of a communication subsystem component of the mobile device of FIG. 1;

   FIG. 3 is a block diagram of a node of a wireless network in one example embodiment;

   FIG. 4 is a block diagram showing an example of data interconnections within a computing device acting as a transmitting device;

   FIG. 5 is a block diagram showing an example of data interconnections within a computing device acting as a transmitting device and having a multi-level formatting module;

   FIG. 6 is a flowchart illustrating an example embodiment of a method for transmitting a data sequence via a light emitting unit;

FIG. 7 is a flowchart illustrating an example embodiment of a transmitting method for generating a display control signal based on a plurality of color identifiers according to one example embodiment;

FIG. 8 illustrates a schematic diagram showing an example processing of a data sequence for transmission via a light emitting unit;

FIG. 9 illustrates a schematic diagram showing another example processing of a data sequence for transmission via a light emitting unit;

FIG. 10 is a block diagram showing an example of data interconnections within a computing device acting as a transmission recipient device;

FIG. 11 is a block diagram showing an example of data interconnections within a computing device acting as a transmission recipient device and having a multi-level formatting module;

FIG. 12 is a flowchart illustrating an example embodiment of a method for receiving a data sequence transmitted via a light emitting unit;

FIG. 13 is a flowchart illustrating another example embodiment of a method for receiving a data sequence transmitted via a light emitting unit;

FIG. 14 is a flowchart illustrating an example embodiment of a method for handshaking between a transmitting device and a transmission recipient device;

FIG. 15 is a schematic diagram showing data interconnections for multi-user transmission in one example embodiment;

FIG. 16 is a schematic diagram showing data interconnection for multi-user transmission in another example embodiment;

FIG. 17 is a schematic diagram showing data interconnection for multi-user transmission in another example embodiment;

FIG. 18 is a schematic diagram showing data interconnections at a transmission recipient device in a multi-user transmission in an example embodiment;

FIG. 19 is a schematic diagram of an example wherein a transmitting device transmits data contemporaneously to multiple transmission recipient devices; and

FIG. 20 is a schematic diagram illustrating a plurality of sub-areas, for a region, to be displayed on a display.

DESCRIPTION OF VARIOUS EMBODIMENTS

Various apparatuses or processes will be described below to provide examples of one or more embodiments. No embodiment described below limits any of the claims, and any of the claims may cover processes or apparatuses that differ from those described below. The claims are not limited to apparatuses or processes having all of the features of any one apparatus or process described below or to features common to multiple or all of the apparatuses or processes described below. It is possible that an apparatus or process described below is not an embodiment that is recited in any of the claims. Any concept disclosed in an apparatus or process described below that is not claimed in this document may be the subject matter of another protective instrument, for example, a continuing patent application, and the applicants, inventors or owners do not intend to abandon, disclaim or dedicate to the public any such concept by its disclosure in this document.

Furthermore, it will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

Furthermore, in the following description, different aspects of the embodiments are defined in more detail. Each aspect so defined may be combined with any other aspect or aspects unless clearly indicated to the contrary. In particular, any feature indicated as being preferred or advantageous may be combined with at least one other feature or features indicated as being preferred or advantageous. A feature or component that may be preferred or advantageous is not necessarily essential.

During transfer of data between two devices, it is generally beneficial to reduce the opportunities for the transferred data to be intercepted. The transfer of data using a radio frequency wireless protocol presents one such opportunity for interception in that radio frequency signals are radiated over an area that extends beyond the immediate physical location occupied by the transmitting and recipient devices. The radiated signals may be received (e.g. "sniffed") by a third party, demodulated, and/or decoded to at least partially extract the data being transferred. Such radio frequency wireless protocols may include near field communication (NFC), Wi-Fi, Bluetooth, etc.

In a broad aspect, described herein is a computing device comprising: a light emitting unit; and a controller communicatively coupled to the light emitting unit, the controller being configured to: apply an encoding to data, using at least one device identifier; generate a plurality of color identifiers by applying a color mapping to the data, wherein each color identifier is associated with one of a plurality of color values; and transmit, via the light emitting unit of the computing device, at least one light signal based on the plurality of color identifiers.

In one embodiment, the at least one device identifier comprises at least one of the following: at least one identifier of the computing device that is unique to the computing device, or at least one identifier of a recipient device that is unique to the recipient device.

In one embodiment, the controller is further configured to format the data to be transmitted into a plurality of multi-level words, prior to applying the color mapping.

In one embodiment, the encoding is applied to the plurality of multi-level words.

In one embodiment, the light emitting unit of the computing device comprises a display, and wherein the controller is further configured to: define at least one image frame to be displayed on the display, each of the at least one image frame comprising a plurality of sub-areas; and for each of the plurality of color identifiers, associate a color identified by the color identifier to one of the plurality of sub-areas of the at least one image frame; wherein transmitting the at least one light signal comprises displaying the at least one frame on the display, each of the plurality of sub-areas of the at least one frame comprising the color associated with the sub-area.

In one embodiment, the controller is further configured to define at least one transmission parameter selected from the following group: at least one color value from a set of color values represented in the plurality of color values, a correspondence of values of the plurality color values to data values of the data, at least one pilot signal to be transmitted, or a frame rate.

In one embodiment, the controller is further configured to transmit at least one pilot signal within a transmission of the at least one light signal, wherein a quality indicator is received from a recipient device, the quality indicator having been generated by the recipient device in response to receiving the at least one pilot signal, and wherein at least one of the following is determined based on the quality indicator received from the recipient device: a size of each of the plurality of sub-areas, a size of a border surrounding one or more of the plurality of sub-areas, a frame repetition rate, or a coding level.

In one embodiment, the data comprises at least a first data sub-sequence and a second data sub-sequence, and wherein the controller is configured to: map the first data sub-sequence to a first sub-sequence of color identifiers; map the second data sub-sequence to a second sub-sequence of color identifiers; apply an encoding to the first data sub-sequence based on an identifier of a first intended recipient device; and apply a different encoding to the second data sub-sequence based on an identifier of a second intended recipient device;

wherein the at least one signal transmitted via the light emitting unit of the computing device is based on the first and second sub-sequences of color identifiers.

In one embodiment, the controller is further configured to encrypt the color identifiers prior to transmitting the data.

In another broad aspect, described herein is a computing device comprising: a light capturing unit; and a controller communicatively coupled to the light capturing unit, the controller being configured to: control the light capturing unit to capture a light signal emitted by a transmitting device; determine a plurality of color identifiers by identifying a plurality of color values in the captured light signal and extracting the plurality of color identifiers from the plurality of color values; generate data by determining a data value corresponding to the color value defined by each of the color identifiers of the plurality of color identifiers; and apply a decoding to the data, using at least one device identifier.

In one embodiment, the at least one device identifier comprises at least one of the following: at least one identifier of the computing device that is unique to the computing device, or at least one identifier of the transmitting device that is unique to the transmitting device.

In one embodiment, the controller is further configured to generate a plurality of multi-level words, prior to generating the data, and wherein the data is generated from a demapping of the plurality of multi-level words.

In one embodiment, the light signal comprises at least one multi-dimensional image frame transmitted via a display, and wherein the controller is further configured to: determine the plurality of color identifiers by identifying sub-areas of the at least one multi-dimensional image frame and the color of each identified sub-area, and extracting the plurality of color identifiers from the identified colors of the sub-areas.

In one embodiment, the data value corresponding to the color value defined by a given color identifier depends on a spatial position of the sub-area, on the display, from which the color identifier was extracted.

In one embodiment, the controller is further configured to decrypt the color identifiers prior to generating the data.

In one embodiment, the controller is further configured to define at least one transmission parameter selected from the following group: at least one color value from a set of color values represented by the plurality of color identifiers, a correspondence of color identifiers to data values of the data, and a frame rate.

In one embodiment, the controller is further configured to identify at least one pilot signal within the captured light signal, and wherein the controller is further configured to generate and transmit a quality indicator to the transmitting device in response to a successful identification of the at least one pilot signal.

In another broad aspect, described herein is a method for transmitting data, the method comprising: applying an encoding to the data, using at least one device identifier; generating a plurality of color identifiers by applying a color mapping to the data, wherein each color identifier is associated with one of a plurality of color values; and transmitting at least one light signal based on the plurality of color identifiers.

In another broad aspect, described herein is a method for receiving data, the method comprising: controlling the light capturing unit to capture a light signal emitted by a transmitting device; determining a plurality of color identifiers by identifying a plurality of color values in the captured light signal and extracting the plurality of color identifiers from the plurality of color values; generating data by determining a data value corresponding to the color value defined by each of the color identifiers of the plurality of color identifiers; and applying a decoding to the data, using at least one device identifier.

In another broad aspect, there is provided a non-transitory computer readable medium comprising a plurality of instructions, wherein the instructions, when executed, configure a controller of a computing device to: apply an encoding to data, using at least one device identifier; generate a plurality of color identifiers by applying a color mapping to the data, wherein each color identifier is associated with one of a plurality of color values; and transmit at least one light signal based on the plurality of color identifiers.

In another broad aspect, there is provided a non-transitory computer readable medium comprising a plurality of, wherein the instructions, when executed, configure a controller of a computing device to: control the light capturing unit to capture a light signal emitted by a transmitting device; determine a plurality of color identifiers by identifying a plurality of color values in the captured light signal and extracting the plurality of color identifiers from the plurality of color values; generate data by determining a data value corresponding to the color value defined by each of the color identifiers of the plurality of color identifiers; and apply a decoding to the data, using at least one device identifier.

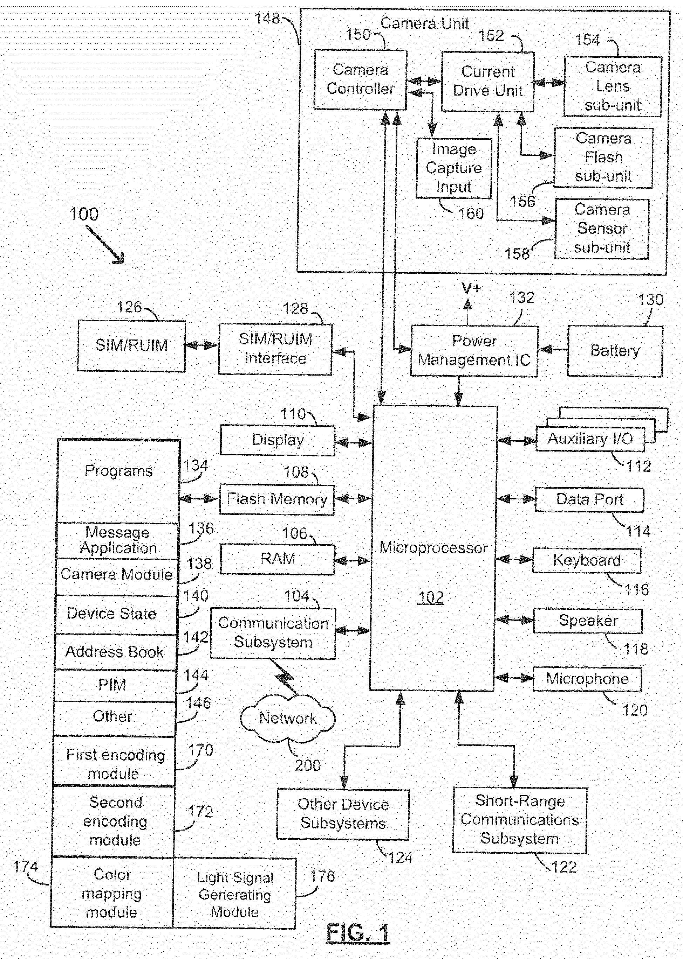

To aid the reader in understanding the structure of an example mobile device, reference will be made to FIGS. 1 to 3. However, it should be understood that the embodiments described herein are not limited to a mobile device but can be extended to any computing device that would benefit from secured data transfer. Examples of such devices generally include cellular phones, cellular smart-phones, wireless organizers, personal digital assistants, computers, laptops, wireless communication devices, wireless enabled notebook computers, tablet computers or e-readers, electronic security devices, media players, wireless Internet appliances and other electronic devices.

Referring now to FIG. 1, shown therein is a block diagram of an example embodiment of an illustrative mobile device 100. The mobile device 100 comprises a number of components, the controlling component being a processor (or more generally, a controller), embodied as a microprocessor 102, which controls the overall operation of the mobile device 100. Communication functions, including data and voice communications, are performed through a communication subsystem 104. The communication subsystem 104 receives messages from and sends messages to a wireless network 200. In this example, the communication subsystem 104 is configured in accordance with the Global System for Mobile Communication (GSM) and General Packet Radio Services (GPRS) standards. In other embodiments, the communication subsystem 104 can be configured in accordance with other communication standards. New standards are still being defined, but it is believed that they will have similarities to the network behavior described herein, and it will also be understood by persons skilled in the art that the various embodiments described herein should be able to be adapted to work with any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit-switched voice communications and packet-switched data communications.

Although the wireless network 200 associated with the mobile device 100 is a GSM/GPRS wireless network in this example, the mobile device 100 can be adapted to use other wireless networks in variant embodiments. For example, the different types of wireless networks that can be employed include, but are not limited to, data-centric wireless networks, voice-centric wireless networks, and dual-mode networks that can support both voice and data communications over the same physical base stations. Examples of networks also include, but are not limited to, Code Division Multiple Access (CDMA), CDMA2000 networks, GSM/GPRS networks, 3G networks like EDGE, W-CDMA and UMTS, 4G/LTE networks and future technologies such as 5G networks. Some other examples of data-centric networks include WiFi 802.11, Mobitex™ and DataTAC™ network communication systems. Examples of voice-centric data networks include Personal Communication Systems (PCS) networks like GSM and Time Division Multiple Access (TDMA) systems. Examples of communication protocols/standards that the mobile device 100 can be adapted to be used with include, but are not limited to, 3GPP and 3GPP2, High-Speed Packet Access (HSPA) standards such as High-Speed Downlink Packet Access (HSDPA), 3GPP LTE, LTE, LTE Advanced, WiMax, and Flash-OFDM.

The microprocessor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, a short-range communications subsystem 122 and other device subsystems 124.

Some of the subsystems of the mobile device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list. Operating system software used by the microprocessor 102 is typically stored in a persistent store such as the flash memory 108, which can alternatively be a read-only memory (ROM) or similar storage element (not shown). Those skilled in the art will appreciate that the operating system, specific device applications, or parts thereof, can be temporarily loaded into a volatile store such as the RAM 106.

The mobile device 100 can send and receive communication signals over the wireless network 200 after network registration or activation procedures have been completed. Network access is associated with a subscriber or user of the mobile device 100. To identify a subscriber, the mobile device 100 may use a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services can include: web browsing and messaging such as e-mail, voice mail, SMS, and MMS. More advanced services can include: point of sale, field service and sales force automation. The SIM card/RUIM 126 includes a processor and memory for storing information. Once the SIM card/RUIM 126 is inserted into the SIM/RUIM interface 128, it is coupled to the microprocessor 102. In order to identify the subscriber, the SIM card/RUIM 126 contains some user parameters such as an International Mobile Subscriber Identity (IMSI). An advantage of using the SIM card/RUIM 126 is that a subscriber is not necessarily bound by any single physical mobile device. The SIM card/RUIM 126 can store additional subscriber information for a mobile device as well, including datebook (or calendar) information and recent call information. Alternatively, user identification information can also be programmed into the flash memory 108.

The mobile device 100 includes a power supply. In the illustrative device of FIG. 1, the mobile device 100 is a battery-powered device and includes a power management IC 132 that provides a battery interface to the one or more rechargeable batteries in a battery unit 130 and manages how power is drawn from the battery 130 and used by the mobile device 100. The power management IC 132 is coupled to a regulator (not shown), which assists the battery unit 130 in providing power V+ to the mobile device 100. Alternatively, the battery unit 130 can be a smart battery as is known in the art. Smart batteries generally include a battery processor, battery memory, switching and protection circuitry, measurement circuitry and a battery pack that includes one or more batteries, which are generally rechargeable. In either case, the one or more batteries in the battery unit 130 can be made from lithium, nickelcadmium, lithium-ion, or other suitable composite material.

The microprocessor 102, in addition to its operating system functions, enables execution of software applications 134 on the mobile device 100. The subset of software applications 134 that control basic device operations, including data and voice communication applications, will normally be installed on the mobile device 100 during its manufacture. When the microprocessor 102 is executing any of the software applications 134, the microprocessor 102 can be considered to be configured to execute a number of acts according to the methods specified by the code of the software applications 134.

The software applications 134 include a message application 136 that allows a user of the mobile device 100 to send and receive electronic messages. Various alternatives exist for the message application 136. Messages that have been sent or received by the user are typically stored in the flash memory 108 of the mobile device 100 or some other suitable storage element in the mobile device 100. In a variant embodiment, some of the sent and received messages can be stored remotely from the device 100 such as in a data store of an associated host system that the mobile device 100 communicates with. For instance, in some cases, only recent messages can be stored within the device 100 while the older messages can be stored in a remote location such as the data store associated with a message server. This can occur when the internal memory of the device 100 is full or when messages have reached a certain "age", i.e. messages older than 3 months can be stored at a remote location. In an example embodiment, all messages can be stored in a remote location while only recent messages can be stored on the mobile device 100.

The mobile device 100 may further include a camera module 138, a device state module 140, an address book 142, a Personal Information Manager (PIM) 144, and/or other modules 146. The camera module 138 is used to control the camera operation for the mobile device 100, which control includes obtaining raw thumbnail image data associated with images taken by the mobile device 100, preprocessing the raw thumbnail image data, and displaying the processed thumbnail image data on the display 110.

The device state module 140 provides persistence, i.e. the device state module 140 ensures that important device data is stored in persistent memory, such as the flash memory 108, so that the data is not lost when the mobile device 100 is turned off or loses power. The address book 142 provides information for a list of contacts for the user. For a given contact in the address book 142, the information can include the name, phone number, work address and email address of the contact, among other information. The other modules 146 can include a configuration module (not shown) as well as other modules that can be used in conjunction with the SIM/RUIM interface 128.

The PIM 144 has functionality for organizing and managing data items of interest to a subscriber, such as, but not limited to, e-mail, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items that are stored or associated or stored and associated with a host computer system. This functionality creates a mirrored host computer on the mobile device 100 with respect to such items. This can be particularly advantageous when the host computer system is the mobile device subscriber's office computer system.

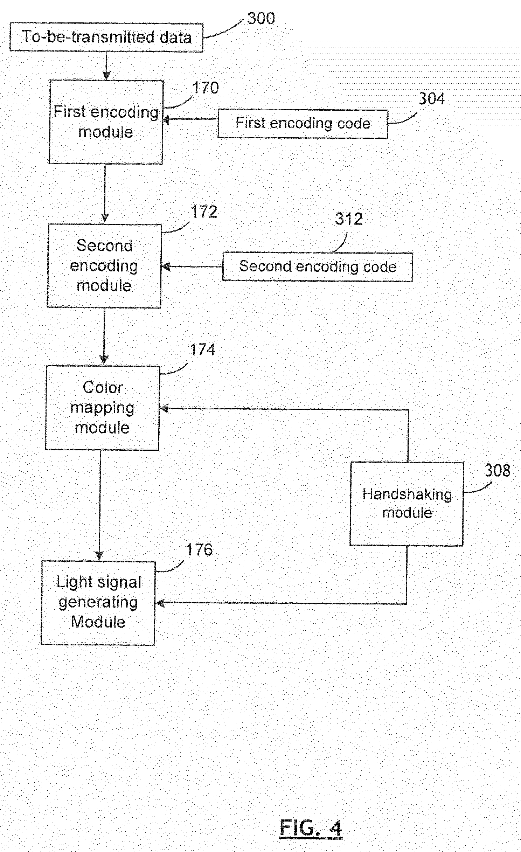

The mobile device 100 further includes at least one data encoding module. According to the illustrated example, the mobile device 100 includes a first encoding module 170 and a second encoding module 172. The mobile device 100 further includes a color mapping module 174 and a light signal generating module 176. According to various example embodiments, other modules may also reside on mobile device 100. Certain functions of one or more of these modules may be combined into fewer modules or distributed among different modules. Features of these and other modules are described with reference to various embodiments, in the descriptions of FIGS. 4 to 20 provided herein.

Additional applications can also be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and can provide enhanced on-device functions, communication-related functions, or both. For example, secure communication applications can enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path can, for example, be used to load an encryption key onto the mobile device 100 through a direct and thus reliable and trusted connection to provide secure device communication.

11 EP 3 051 845 B1 12

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the mobile device 100.

The short-range communications subsystem 122 provides for communication between the mobile device 100 and different systems or devices, without the use of the wireless network 200. For example, the subsystem 122 can include an infrared device and associated circuits and components for short-range communication. Examples of short-range communication include standards developed by the Infrared Data Association (IrDA), Near Field Communication (NFC), Bluetooth, and the 802.11 family of standards developed by IEEE.

In use, a received signal such as a text message, an e-mail message, or web page download will be processed by the communication subsystem 104 and input to the microprocessor 102. The microprocessor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as a touch screen, mouse, track ball, track pad, infrared fingerprint detector, or a roller wheel with dynamic button pressing capability. The keyboard 116 may be an alphanumeric keyboard or a telephone-type keypad or both an alphanumeric and telephone-type keypad. However, other types of keyboards, such as a virtual keyboard implemented with a touch screen, can also be used. A composed item can be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

The mobile device 100 also includes a camera unit 148 that allows a user of the mobile device 100 to take pictures (e.g. still images and/or video). The camera unit 148 includes a camera controller 150, a current drive unit 152, a camera lens sub-unit 154, a camera flash sub-unit 156, a camera sensor sub-unit 158 and an image capture input 160. The camera controller 150 configures the operation of the camera unit 148 in conjunction with information and instructions received from the microprocessor 102 and the camera module 138. It should be noted that the structure shown for the camera unit 148 and the associated description is only one example embodiment and that the technique of obtaining camera images for viewing on the display 110 should not be limited to this example embodiment. Furthermore, there may be alternative embodiments of the mobile device 100 which do not use the camera unit 148.

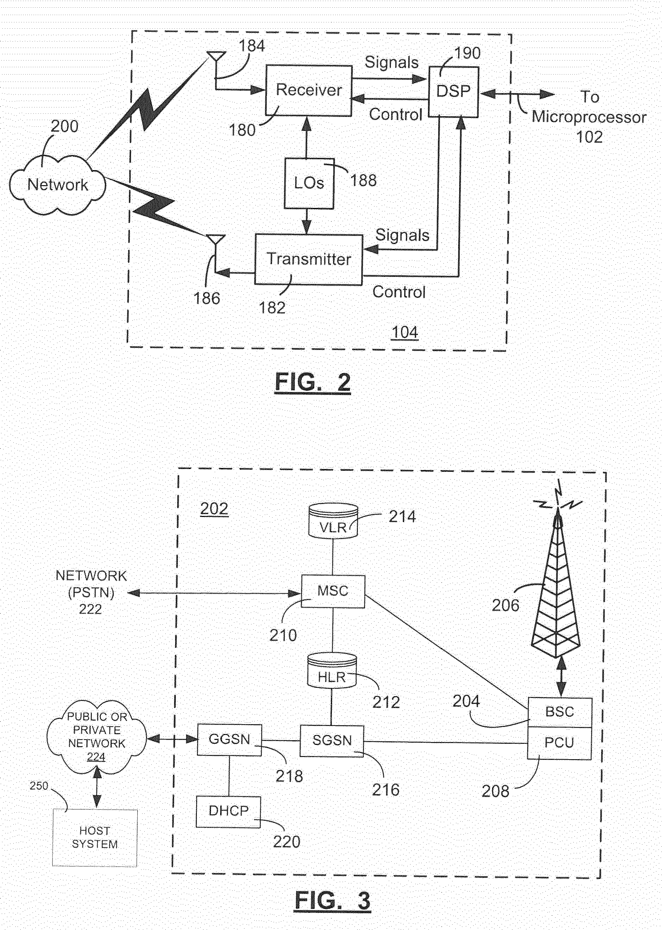

Referring now to FIG. 2, a block diagram of an example embodiment of the communication subsystem component 104. The communication subsystem 104 comprises a receiver 180, a transmitter 182, one or more embedded or internal antenna elements 184, 186, Local Oscillators (LOs) 188, and a processing module such as a Digital Signal Processor (DSP) 190.

The particular design of the communication subsystem 104 is dependent upon the network 200 in which the mobile device 100 is intended to operate; thus, it should be understood that the design illustrated in FIG. 2 serves only as one example. Signals received by the antenna 184 through the network 200 are input to the receiver 180, which may perform such common receiver functions as signal amplification, frequency down conversion, filtering, channel selection, and analog-to-digital (A/D) conversion. A/D conversion of a received signal allows more complex communication techniques such as demodulation and decoding to be performed in the DSP 190. In a similar manner, signals to be transmitted are processed, including modulation and encoding, by the DSP 190. These DSP-processed signals are input to the transmitter 182 for digital-to-analog (D/A) conversion, frequency up conversion, filtering, amplification and transmission over the network 200 via the antenna 186. The DSP 190 not only processes communication signals, but also provides for receiver and transmitter control. For example, the gains applied to communication signals in the receiver 180 and the transmitter 182 may be adaptively controlled through automatic gain control algorithms implemented in the DSP 190.

The wireless link between the mobile device 100 and a network 200 may contain one or more different channels, typically different RF channels, and associated protocols used between the mobile device 100 and the network 200. An RF channel is a limited resource that must be conserved, typically due to limits in overall bandwidth and limited battery power of the mobile device 100.

When the mobile device 100 is fully operational, the transmitter 182 is typically keyed or turned on only when it is sending to the network 200 and is otherwise turned off to conserve resources. Similarly, the receiver 180 may be periodically turned off to conserve power until it is needed to receive signals or information (if at all) during designated time periods.

Referring now to FIG. 3, a block diagram of a node of a wireless network is shown as 202. In this example embodiment, the network and its components are described for operation with General Packet Radio Service (GPRS) and Global Systems for Mobile (GSM) tech-

7

nologies. However, it should be understood that in other embodiments the network can be implemented in accordance with other communication protocols. In practice, the network 200 comprises one or more nodes 202. The mobile device 100 communicates with a node 202 within the wireless network 200. The node 202 is configured in accordance with GPRS and GSM technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to the public or private network (Internet) 224 (also referred to herein generally as a shared network infrastructure) represents the data path for GPRS capable mobile devices. In a GSM network extended with GPRS capabilities, the BSC 204 also contains a Packet Control Unit (PCU) 208 that connects to the SGSN 216 to control segmentation, radio channel allocation and to satisfy packet switched requirements. To track mobile device location and availability for both circuit switched and packet switched management, the HLR 212 is shared between the MSC 210 and the SGSN 216. Access to the VLR 214 is controlled by the MSC 210.

The station 206 may be a fixed transceiver station in which case the station 206 and the BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further the VLR 214 also contains information on mobile devices that are visiting other networks. The information in the VLR 214 includes part of the permanent mobile device data transmitted from the HLR 212 to the VLR 214 for faster access. By moving additional information from a remote node of the HLR 212 to the VLR 214, the amount of traffic between these nodes can be reduced so that voice and data services can be provided with faster response times while at the same time using less computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the network 200. The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, GPRS capable networks use private, dynamically assigned IP addresses and thus use a DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile device 100, through the PCU 208 and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and the mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile device 100 is not using its PDP Context, the PDP Context can be de-allocated and the IP address returned to the IP address pool managed by the DHCP server 220.

The host system 250 may be a corporate enterprise or other local area network (LAN), but may also be a home office computer or some other private system, for example, in variant embodiments. In some cases, the host system 250 may represent a smaller part of a larger network of an organization. Typically, mobile devices communicate wirelessly with the host system 250 through one or more of the nodes 202 of the wireless network 200. The host system 250 may include one or more routers and computing devices that may operate from behind a firewall or proxy server. The proxy server routes data to the correct destination server(s) within the host system 250. For instance, the host system 250 may include a message server to send and receive messages to the mobile devices and a message management server that controls when, if, and how messages are sent to the mobile devices. The host system 250 can also include other servers that provide various functions for the host system 250 as well as data stores or databases.

Some example embodiments described herein relate generally to the transmission of data between at least two computing devices, such as at least two mobile devices 100. For a given transmission, one of the computing devices acts as the transmitting device (also referred to herein generally as a transmitting computing device) and at least one other computing device acts as the transmission recipient device (also referred to herein generally as a recipient computing device). The transmitting computing device transmits the data to the recipient computing device.

Referring now to FIG. 4, therein illustrated is a block diagram showing an example of data interconnections of a first encoding module 170, a second encoding module 172, a color mapping module 174, and a light signal generating module 176. In this example, the data interconnections correspond to where a computing device, such as a mobile device 100, is acting as the transmitting computing device to transmit data 300 that it intends to transmit to at least one recipient computing device. The transmitting computing device is configured to display at least one light signal that is to be subsequently captured by a recipient computing device, which can then be processed to retrieve the transmitted data from the captured light signal.

To-be-transmitted data 300 is defined within one of the modules of the transmitting computing device. The to-be-transmitted data 300 may correspond to one or more files to be transmitted (e.g. an image file, a word processing document, a spreadsheet document, or more generally any data-containing file), which can typically be represented by a sequence of data bits or characters, such as a sequence of binary bits.

As illustrated, the to-be-transmitted data 300 is received at the first encoding module 170. In at least one embodiment, the first encoding module 170 applies an encoding to the to-be-transmitted data 300 based on a first encoding code 304.

Encoding the to-be-transmitted data 300 herein refers to modifying or transforming the data based on an encoding code, whereby use of a decoding code corresponding to the encoding code can reverse the applied modification or transformation. For example, encoding the to-be-transmitted data 300 may include encrypting the data 300 or scrambling the data 300. Where the data 300 is encrypted, the encoding code may act as an encryption key for the encrypting. Where the data sequence is scrambled, the encoding code may define the transfer function for the scrambling; a corresponding decoding code may then define the inverse transfer function so as to descramble the data sequence.

According to various example embodiments, the first encoding code 304 may be a piece of information that identifies at least one intended recipient computing device (i.e. a recipient computing device to which the transmitting computing device wishes to transmit the to-be-transmitted data 300) within the data transmission. In one embodiment, the first encoding code 304 may be based on data that is known only to the transmitting computing device and the intended recipient computing device (e.g. a shared secret).

For example, where the first encoding code 304 is an identifier of the intended recipient computing device, the first encoding code 304 may include one or more of a phone number of the intended recipient device, the email address of the intended recipient computing device, the media access control (MAC) address of the intended recipient computing device, and a personal identification number (PIN) associated with the intended recipient computing device. Other examples of identifiers of the intended recipient computing device may include fingerprint or retina signature data, or a digital key.

In at least one embodiment, the first encoding code 304 will be an identifier that is unique to the intended recipient computing device.

In at least one variant embodiment, an identifier of the intended recipient computing device may not serve as the actual encoding code used to directly encrypt or scramble data, but rather the identifier is used to generate a further code to be used as the first encoding code 304 to encrypt or scramble data. For example, a PIN or phone number associated with the intended recipient computing device may be used to select an orthogonal code (e.g. Walsh code) sequence associated with the intended recipient computing device.

According to various example embodiments, the first encoding code 304 is a code that is mathematically orthogonal to other codes associated with other potential recipient devices or files. For example, the first encoding code 304 may be a Walsh Code scrambling sequence. A PIN associated with the intended recipient device can be used to select a particular Walsh Code sequence. The orthogonal nature of the possible codes that may be selected ensures that the first encoding code 304 will be unique.

By way of illustration, one simple way to assign an orthogonal code based on a PIN is for a user to do it manually (e.g. PIN 12345 -> Walsh Code 6). Alternatively, a mathematical formula or other algorithm may be utilized to automatically associate a PIN with a particular encoding code. When the appropriate decoding code is available to or can be derived at the intended recipient computing device, then the recipient computing device will be able to process the data it receives; however, if manual assignment is used, then a message identifying the code used in the encoding (and/or the decoding code) will typically need to be sent from the transmitting computing device to the intended recipient computing device.

In accordance with this embodiment, the to-be-transmitted data 300 is encoded, using the Walsh Code, prior to being mapped to a plurality of color identifiers, as will be described in further detail. In such an application of first encoding code 304, the first encoding code 304 may also be referred to as a spreading code, which is used to identify the intended recipient computing device, at the transmitting computing device.

Encoding the to-be-transmitted data 300 provides a first security element to the transmission because a decoding code corresponding to the first encoding code 304 must be known by a computing device that receives the transmission in order to decode the received data.

Continuing with FIG. 4, in one embodiment, the data output by the first encoding module 170 is received at the second encoding module 172. The second encoding module 172 is configured to apply a further encoding to the data, based on a second encoding code 312.

According to at least one example embodiment, the second encoding code 312 may comprise a piece of information that identifies the transmitting computing device (in contrast to the first encoding code, which identified particular recipient computing devices). This act of encoding data using the second encoding code 312 may also be referred to as scrambling. In one embodiment, the second encoding code 312 may be a piece of information that is known only to the transmitting computing device and the intended recipient computing device (e.g. a shared secret).

In at least one embodiment, the second encoding code 312 is an identifier that is unique to the transmitting computing device.

By way of example, the second encoding code 312 may include one or more of a phone number of the transmitting computing device, an email address of the transmitting computing device, a MAC address of the transmitting computing device, and a PIN associated with the transmitting computing device. Other examples of identifiers of the transmitting computing device may include fingerprint or retina signature data, or a digital key.

In variant embodiments, the second encoding code 312 comprises a pseudo-noise (PN) scrambling sequence, selected using the identifier of the transmitting computing device. A PN-Sequence is not an orthogonal sequence like a Walsh code; however, it may have beneficial autocorrelation properties, which may allow a recipient device to more accurately separate multiple incoming light signals arriving from multiple light emitting devices. Orthogonal codes do not have this autocorrelation characteristic.

Encoding data with the second encoding code 312 may provide an additional security element to the eventual transmission, because the second encoding code must be known by a device receiving the transmission in order for the recipient device to be able to successfully decode the data.

According to various example embodiments, the first encoding code 304 used by the first encoding module 170 is a code that is different from the second encoding code 312 used by the second encoding module 172. As previously noted, the first encoding code 304 may be used, at the transmitting device, to identify different recipient devices; the second encoding code 312 may be used, at the transmitting device, to scramble transmitted data in a way that permits a recipient device to identify the transmitting device, potentially distinguishing one particular transmitting device from multiple other possible transmitting devices. This may be particularly beneficial when a recipient device is in close proximity with multiple transmitting devices all sending data to the recipient device, and where the recipient device may receive a certain data transmission but cannot readily determine which of the multiple transmitting devices had sent the given data transmission.

Nevertheless, in variant embodiments, second encoding module 172 and/or second encoding code 312 may not be utilized. As examples, it may be appropriate to omit applying the further encoding when the associated additional security benefits are not desired, when the recipient computing device is highly unlikely to be in close proximity with other transmitting devices (or at least with other transmitting devices that might be transmitting data contemporaneously), where the transmitting computing device merely wants to broadcast the data signal without concern for whether recipient computing devices may or may not be able to identify the source of the data signal, and so on.

Referring again to FIG. 4, according to one example embodiment, and as illustrated, a color mapping module 174 receives the to-be-transmitted data 300 after having been encoded based on the first encoding code 304 and, optionally, the second encoding code 312.

However, it will be understood that in variant embodiments, the first encoding module 170 may not reside at mobile device 100, and/or the to-be-transmitted data 300 may not have been encoded by the first encoding module 170 or at all. For example, in a variant embodiment, the to-be-transmitted data 300 may be received directly at the color mapping module 174.

In example embodiments described herein, the color mapping module 174 generates a plurality of color identifiers by applying a color mapping to the to-be-transmitted data 300, after encoding. The mapping of the to-be-transmitted data 300 to the plurality of color identifiers includes generating, for each unit or group of units of data 300, a color identifier that is representative of that unit or group of units.

In one embodiment, the correspondence between each possible unit value, or value represented by a group of data units, to a value defined by one of the color identifiers may be defined by a handshaking module 308 or some other control module.

Each color identifier defines or is associated with one of a plurality of color values that can be visually displayed on a light emitting unit of the transmitting computing device. The plurality of color identifiers may be used to form, for example, a sequence of color identifiers for further processing and/or transmission. The order of the color identifiers is typically maintained during transmission in order to facilitate an eventual demapping of the sequence of color identifiers at the recipient computing device (thus allowing retrieval of the original to-be-transmitted data 300 at the recipient computing device). However, it will be understood that the plurality of color identifiers need not be processed and/or transmitted in a linear sequence in all embodiments, so long as a sequence that allows the original data 300 to be retrieved at the recipient computing device can be reconstructed.

The term "light emitting unit" as used herein generally refers to a component of a device (e.g. of a computing device) that can emit a light signal. According to some example embodiments, the light emitting unit may be a device having an on-off state, such as the camera flash sub-unit 156. According to other example embodiments, the light emitting unit may be a device operable to emit a point light source in a plurality of colors, such as a status indicator light. According to yet other example embodiments, the light emitting unit may be a multi-dimensional display operable to emit a plurality of colors, such as the display 110 of a mobile device 100.

Each color identifier may define one color value from a set of at least two color values. It will be understood that term "color value" may refer to a color that can be displayed by the light emitting unit (e.g. the light emitting unit displaying light at a certain frequency). Depending on the context, it will be understood that term "color value" may also refer to one of two or more states of the light emitting unit (e.g. the light emitting unit in a first state where it emits light and a second state where it does not emit light).

According to other example embodiments, where the light emitting device is capable of displaying more than two colors, each color identifier defines a color value from a set of two or more color values. For example, each color identifier may represent a color to be displayed (e.g. an RGB triplet), determined in accordance with a scheme known in the art.

The mapping of the to-be-transmitted data 300 to color identifiers may be based on transmission parameters as defined by the handshaking module 308. More specifically, the handshaking module 308 may define one or more parameters of the light signal that is to be transmitted by the transmitting computing device. The parameters may include the set of color values represented in the plurality of color values, which also represent the colors that will be displayed within the light signal emitted during the transmission. The parameters may also include a correspondence between each color value of the set of color values to a data value in the to-be-transmitted data 300. The parameters may also define the duration of sub-components of the light signal, such as frame rate.

According to one example embodiment, the transmission parameters may be defined based on at least one sensed ambient condition and/or at least one characteristic of the intended recipient computing device. In this regard, the handshaking module 308 may be operable to sense ambient conditions of the environment within which the transmitting computing device and/or the intended recipient computing device are operating. The ambient conditions may include ambient light conditions, such as color temperature. The handshaking module 308 may also communicate with the intended recipient computing device to retrieve one or more characteristics of the intended recipient computing device. For example, the handshaking module 308 may receive information relating to technical capabilities of the image capture unit of the intended recipient computing device.

The set of color values defined by the handshaking module 308 can be received at the color mapping module 174, which maps the to-be-transmitted data 300 to color identifiers, wherein each color identifier defines a color value from the set of color values determined by the handshaking module 308.

The handshaking module 308 may also define at least one pilot identifier. The pilot identifier defines a portion of the light signal that represents values (or one or more sequences thereof) that are known in advance to both the transmitting computing device and the intended recipient computing device. The at least one pilot identifier may be embedded into a sequence of color identifiers to be further processed and/or transmitted. The at least one pilot identifier can be useful for identifying whether the light signal emitted by the transmitting computing device is being properly captured by the intended recipient computing device.

For example, pilot identifiers may be embedded into a sequence of color identifiers to be initially transmitted via a display of the transmitting computing device prior to the transmission of the to-be-transmitted data 300 (e.g. in a setup sequence). When colors corresponding to the pilot identifiers are displayed on the display of the transmitting computing device, a representation of the pilot identifiers may be placed in a location in a two-dimensional frame where recipient computing devices expect the pilot identifiers to be displayed during setup, to be read by the intended recipient computing device.

For instance, the pilot identifiers may be represented by a specific sequence of colored boxes, potentially all of the same color; this specific sequence must match (e.g. in terms of color and number) what the recipient computing device expects to read from the signal in order to verify that the light signal is being properly captured. The size of the boxes may be changed dynamically, until the recipient computing device can confirm that it can properly read the pilot identifiers and transmit corresponding feedback (e.g. a quality indicator provided by the recipient computing device) to the transmitting computing device (e.g. via handshaking module 308).

As an example, each colored box might, in theory, be sized with an area of one square pixel, but it is unlikely that the recipient computing device will be able to resolve a sequence of differently colored boxes at this resolution. Screen smudges, light reflecting onto the screen from the surrounding environment, slight movements of the transmitting and/or recipient computing devices, and other artefacts or factors can represent challenges to the ability of a recipient computing device to distinguish between individual elements of a color sequence. Increasing the size of the colored boxes (e.g. to 4 x 4 pixels, to 8 x 8 pixels, to 16 x 16 pixels, to 32 x 32 pixels, etc.) can make subsequent colors in a sequence easier to resolve, but will result in a decrease in the effective rate at which data can be transmitted between devices, as more pixels are needed to represent a given data unit.

By dynamically changing the dimensions of the colored boxes used in displaying the pilot identifiers, an optimal area of pixels needed to represent a single color within a color sequence can be determined at the recipient computing device. As the area of pixels representing a single color within a color sequence increases, the recipient computing device will be more likely to be able to properly resolve colors of the color sequence; however, with lower areas, data throughput rates can be maximized. The recipient computing device can select or otherwise determine an optimal area, and transmit information (e.g. a quality indicator) back to the transmitting computing device, so that an appropriate pixel area or group size may be used when the to-be-transmitted data 300 is transmitted to the recipient computing device.

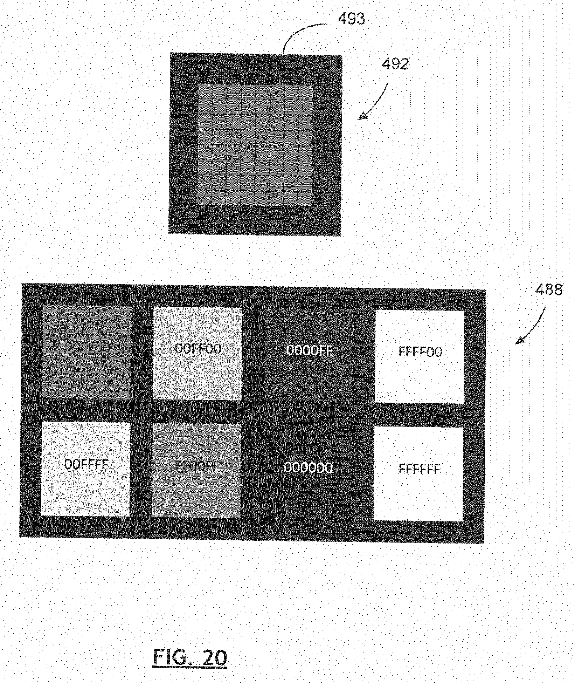

Accordingly, at least one embodiment described herein implements a mapping process where some or all of: the area of same-color pixels, dimensions of a separation region (e.g. black pixels forming a border that surrounds a given area of same-color pixels, such as border 493 of FIG. 20), the coding level (which indicates the amount of redundancy added to the user data in order to fix channel induced errors), and the frame repetition rate (at which colors are displayed on a display of the transmitting device), are selected in conjunction with a multilevel symbol pattern, based on the quality indicator received from the recipient computing device that was computed in response to (e.g. successfully) receiving the pilot identifiers transmitted by the transmitting computing device.

In variant embodiments, pilot identifiers need not only be sent in the initial setup before data is transmitted from the transmitting computing device to the recipient computing device, but they may be subsequently sent during the data transmission as well (e.g. every 3-4 frames, every 10 or 15 frames). Since the properties of the communication "channel" between the two computing devices via which the light signals are transmitted can change rapidly (e.g. due to changes in the ambient conditions within the immediate environment, movement of the devices, etc.), the pilot identifiers can be used to allow the recipient computing device to provide continuous feedback to the transmitting computing device on whether data is being properly read. If necessary, one or more parameters of the data transmissions, including the pixel area or group size used to represent a color in the color sequence, for example, may be dynamically changes depending on this feedback.

In variant embodiments, pilot identifiers may not be used, and a certain default pixel area or group size may be employed. This may be appropriate for certain transmissions where feedback from one or more recipient computing devices is not or cannot be received at the transmitting computing device.

Referring again to FIG. 4, the plurality of color identifiers is received at the light signal generating module 176. According to one example embodiment, and as illustrated, the light signal generating module 176 receives the plurality of color identifiers from the color mapping module 174. The light signal generating module may be communicatively coupled to or implemented in an image signal processor (ISP), for example.

The light signal generating module 176 formats the plurality of color identifiers so as to be displayable by the light emitting unit. For example, where the light emitting unit has only an on and off state, the light signal generating module 176 generates a display control signal formed of on-off signals that correspond to the on-off values of the plurality of color identifiers.

In one embodiment, where the light emitting unit comprises a two-dimensional display area, the light signal generating module 176 generates, based on the plurality of color identifiers, a display control signal that defines a plurality of sub-areas (also generally described herein as a pixel area or group) within the display area, as well as the color to be displayed in each sub-area and the duration that the color is to be displayed in that sub-area.

The light emitting unit can be controlled to emit a light signal based on the display control signals. For example, the display control signal may be received at an Image Signal Processor (ISP)/video processor (not shown explicitly in FIG. 4) coupled to the display 110 (FIG. 1). The display device 110 then displays at least one light signal that corresponds to the display control signal

It will be appreciated that since the display control signal is generated from the plurality of color identifiers (either directly, or indirectly after further encoding), the at least one light signal that is displayed effectively encodes the original data (i.e. the to-be-transmitted data 300 in its original form) represented by the plurality of color identifiers. Where the color identifiers includes at least one pilot identifier, the light emitting unit will also emit the pilot signal corresponding to the at least one pilot identifier in the course of displaying the at least one light signal. As previously noted, the pilot identifiers are used to assist in the overall synchronization process. They may also be used to determine a desired size of the pixel blocks of same colors, which can help the receiving entity (e.g. camera associated with a recipient computing device) demodulate the modulated light signal correctly.

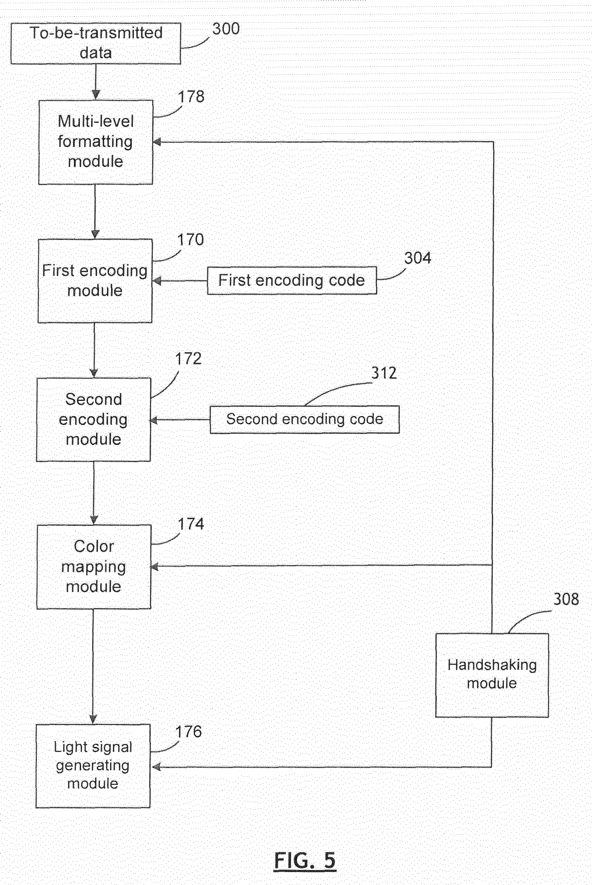

Referring now to FIG. 5, therein illustrated is a block diagram showing an example of data interconnections of the first encoding module 170, the second encoding module 172, the color mapping module 174, the light signal generating module 176, and, additionally, a multi-level formatting module 178. According to the example illustrated in FIG. 5, the light signal displayed by the transmitting computing device is represented using more than two color values. The reader is directed to the description of FIG. 4 for further details on analogous elements represented in FIG. 5.

As illustrated, and in contrast to FIG. 4, the to-be-transmitted data 300 is received at a multi-level formatting module 178. The multi-level word formatting module 178 formats the to-be-transmitted data 300 into a plurality of multi-level words. In one embodiment, the multi-level formatting is applied prior to applying the color mapping to the data 300. Multi-level word herein refers to a unit of data (e.g. a group of bits/characters) that can define one of a plurality of values. According to various example embodiments, the multi-level words can define at least two unique values.

According to one example embodiment, the multi-level formatting module 178 formats the to-be-transmitted data 300 by separating the data 300 into a plurality of discrete data frames of bits or characters. The size of each discrete data frame of bits may be chosen based on properties defined by the handshaking module 308, possibly based on feedback obtained from the intended recipient computing device in response to an earlier transmission of pilot identifiers.

For example, the size of each discrete data frame of bits or characters may correspond to the size of the set of color values to be used during the transmission. For example, where eight colors are to be used, each data frame is associated with at least three binary bits defining one of the eight possible color values. The size of the set of color values to be used may be selected such that the hamming distance between colors in the set is maximized.

According to another example embodiment, the multi-level formatting module 178 formats the to-be-transmitted data 300 by generating values corresponding to a plurality of combinations of states, each combination state representing a different one of a plurality of values and representing a different data frame of bits or characters of the to-be-transmitted data 300.

For example, the data 300 may be separated into a plurality of discrete data frames of bits or characters. Accordingly, a modulation scheme may then be used to generate a combination of real and complex symbols representing each data frame of bits or characters of the to-be-transmitted data 300. For example, the modulation scheme to be utilized may be quadrature amplitude modulation (QAM), whereby the combination of a phase value and an amplitude value is used to represent a data frame of bits or characters.

Continuing with FIG. 5, the plurality of multi-level words (also referred to herein as "symbols" in certain embodiments) generated by the multi-level formatting module 178 is subject to further processing. For example, as illustrated, the plurality of multi-level words, which form a sequence in at least one embodiment, is received at the first encoding module 170 and the encoding is applied to the plurality of multi-level words based on the first encoding code 304. The first encoding module 170 was described earlier with reference to FIG. 4, and that description is applicable to the example of FIG. 5 with appropriate modifications and/or adjustment.

Continuing with FIG. 5, the sequence of multi-level words encoded by the first encoding module 170 is received at the second encoding module 172, and further encoded. The second encoding module 172 was described earlier with reference to FIG. 4, and that description is applicable to the example of FIG. 5 with appropriate modifications and/or adjustment.

Continuing with FIG. 5, the sequence of multi-level words is received at the color mapping module 174. According to one example embodiment, and as illustrated, the color mapping module 174 receives the multi-level words that have been encoded based on the first encoding code 304 and, optionally, second encoding code 312.

However, it will be understood that according to other example embodiments, the first encoding module 170 is not provided within the mobile device 100 and/or the plurality of multi-level words is not encoded by the first encoding module 170. In some embodiments, the second encoding module 172 is not provided and/or the plurality of multi-level words is not encoded by the second encoding module 172. Accordingly, in some example embodiments, the plurality of multi-level words generated at 178 may be received directly at the color mapping module 174.

The color mapping module 174 maps the plurality of multi-level words (potentially after encoding) to a plurality of color identifiers. Each of the color identifiers corresponds to one of the multi-level words, and the color value defined by that color identifier represents the value defined by the multi-level word. Each color identifier defines a color that can be visually displayed on the light emitting unit. As described herein, each color identifier defines one color value from a set of a plurality of color values. The number of color values may correspond to the number of different values that can be represented by each multi-level word.

Certain properties of the color mapping module 174 were described earlier with reference to FIG. 4, and that description is applicable to the example of FIG. 5 with appropriate modifications and/or adjustments. In particular, the handshaking module 308 may assist in determining the correspondence between each of the set of color values defined by the color identifiers and the plurality of values that can be defined by the multi-level words.

The plurality of color identifiers is received at the light signal generating module 176. According to the example embodiments where the to-be-transmitted data sequence 300 is formatted to multi-level words, the light signal generating module 176 maps the plurality of color identifiers to at least one image frame to be displayed on a two-dimensional display device. According to such example embodiments, the light signal generating module 176 defines at least one image frame to be displayed. Each of the at least one image frame comprises a plurality of sub-areas each representing a portion of the displayable area of the image frame. For each of the sub-areas of the at least one image frame, that sub-area is associated with a given color identifier from the plurality of color identifiers. That is, each sub-area and each color identifier are associated in a one-to-one relationship. According to example embodiments where the plurality of color identifiers are ordered in a sequence for transmission, association of the sub-areas to the color identifiers can be carried out so that the ordering is maintained. Based on the association of the sub-areas to the color identifiers, the light signal generating module 176 generates a display control signal. The display control signal controls the two-dimensional display so that the at least one image frame is displayed on the display, whereby each of the sub-areas of the displayed at least one frame has the color defined by the color identifier associated to the sub-area.

It will be understood that while the example of FIGS. 4 and 5 shows both a first encoding module 170 and a second encoding module 172, according to a variant embodiment only one of the first encoding module 170 and the second encoding module 172 may be provided within the transmitting computing device, to encode one of the data 300 or the plurality of color identifiers.

Furthermore, while the first encoding code 304 and second encoding code 312 were described having particular example properties, the first encoding code 304 may have the properties of the second encoding code 312 as described earlier and/or the second encoding code 312 may have the properties of the first encoding code 304 as described earlier (i.e. certain properties of the codes used may be switched) in variant embodiments. For example, the first encoding code 304 may be associated with the transmitting device rather than a potential recipient device, and the second encoding 312 may be associated with a potential recipient device rather than with the transmitting device. As a further example, the first encoding code 304 may be a scrambling code (e.g. a PN-sequence) and/or the second encoding code 304 may be an orthogonal code (e.g. a Walsh code) selected based on an identifier unique to a potential recipient device.

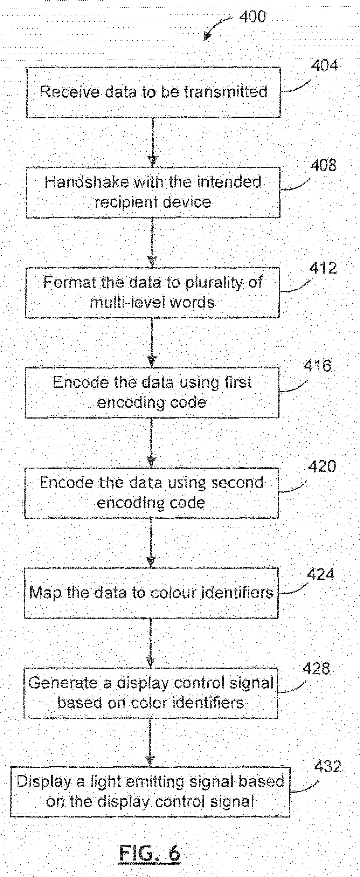

Referring now to FIG. 6, shown therein is a flowchart illustrating an example embodiment of a transmitting method 400 for transmitting data via a light emitting unit. The method 400 may be carried out by a controlling component of a computing device, such as a processor, embodied as a microprocessor (e.g. 102 of FIG. 1). The method 400 may be carried out by the microprocessor as it is enabling execution of software applications. Certain details of method 400 were previously described with reference to FIG. 4 or FIG. 5, and the reader is directed to the description of those Figures, which is to be incorporated into the description of FIG. 6. Features described with reference to FIG. 6 may also be applicable to the examples of FIG. 4 and/or FIG. 5.

At 404, the data that is to be transmitted from the transmitting computing device (e.g. mobile device 100 of FIG. 1) is received or identified for processing. The to-be-transmitted data (e.g. 300 of FIG. 4 or FIG. 5) may correspond to one or more files to be transmitted, and can generally be represented by a sequence of data bits or characters, such as a sequence of binary bits.

At 408, handshaking with the intended recipient device is conducted so as to define parameters of the upcoming transmission. For example, the handshaking at 408 may include defining parameters of the light signal that is to be emitted from the transmitting computing device.

For example, conducting the handshaking at 408 may include controlling certain components of the transmitting computing device so as to sense ambient conditions of the environment surrounding the transmitting computing device and/or the intended recipient computing device. The ambient conditions may include ambient light conditions, such as color temperature. The handshaking at 408 may also include communicating with an intended recipient computing device to retrieve one or more characteristics of the intended recipient computing device. For example, handshaking at 408 may include receiving information relating to technical capabilities of the image capture unit of the intended recipient computing device.

Conducting the handshaking at 408 may include defining parameters of the light signal that is to be transmitted by the transmitting device. The parameters may include the set of color values represented in the plurality of color values, which also represent the colors that will be displayed within the light signal emitted during the transmission. The parameters may also include a correspondence between each color value of the set of color values, to a data value in the to-be-transmitted data. The parameters may also define the duration of sub-components of the light signal, such as frame rate.

According to one example embodiment, the transmission parameters may be defined based on at least one sensed ambient condition and/or at least one characteristic of the intended recipient computing device.

Handshaking at 408 may also include defining at least one pilot identifier. The pilot identifier defines a portion of the light signal that represents values that are known in advance to both the transmitting computing device and the intended recipient computing device. The at least one pilot identifier is useful for identifying whether the light signal emitted by the intended recipient computing device is being properly captured.

It will be understood that handshaking does not need to be carried out in every iteration of transmitting method 408. For example, the transmitting method 408 may be carried out using predetermined (e.g. default) transmission parameters, or transmission parameters determined in a previous iteration of the transmitting method.

At 412, the to-be-transmitted data may be formatted into a plurality of multi-level words. According to one example embodiment, the to-be-transmitted data is formatted at 412 by separating the data into a plurality of discrete data frames of bits or characters. The size of each data frame of bits may be chosen based on properties defined during the handshaking performed at 408. For example, the size of each discrete data frame of bits or characters corresponds to the size of the set of color values to be used during the transmission. For example, where eight colors are to be used, each data frame is associated with at least three binary bits to define one of the eight possible color values.

At 416, the to-be-transmitted data, or the plurality of multi-level words (see e.g. FIG. 5), is encoded based on a first encoding code (e.g. 304 of FIG. 4 or FIG. 5). The first encoding code may be a piece of information that identifies at least one intended recipient computing device within the data transmission. In one embodiment, the encoding code may be a piece of information that is known only to the transmitting computing device and the intended recipient computing device.

For example, the first encoding code may include one or more of a phone number of the intended recipient computing device, an email address of the intended recipient computing device, a MAC address of the intended recipient computing device, a PIN number associated with the intended recipient computing device, fingerprint or retina signature data (e.g. of a user of the intended recipient computing device), or a digital key associated with the intended recipient computing device.

According to various example embodiments, the first encoding code is a code that uses an identifier (e.g. a PIN number associated with the intended recipient device) to select a code that is mathematically orthogonal to other codes in a set. For example, the first encoding code may be a Walsh Code or other orthogonal variable spreading factor (OVSF). The code may also be selected manually. An association between a particular recipient computing device (via the identifier) and an orthogonal code can accordingly be made. The orthogonal nature of the possible encoding codes ensures that the selected first encoding code is unique.

At 420, an encoding is applied to the sequence of color identifiers based on a second encoding code (e.g. 312 of FIG. 4 or FIG. 5).

In one embodiment, the second encoding code generally refers to a piece of information that identifies the transmitting computing device for a given data transmission. In one embodiment, the second encoding code may be a piece of information that is known only to the transmitting computing device and the intended recipient computing device.

For example, the second encoding code may comprise a pseudo-noise (PN) scrambling sequence, selected using the identifier of the transmitting computing device. According to various example embodiments, the first encoding code (e.g. 304 of FIG. 4 or FIG. 5) applied at 416 is a code that is different from the second encoding code (e.g. 312 of FIG. 4 or FIG. 5) applied at 424.

At 424, the encoded to-be-transmitted data, or the sequence of multi-level words (see e.g. FIG. 5), are mapped to a plurality of color identifiers. Each color identifier defines a color that can be visually displayed on the light emitting device. The plurality of color identifiers may form a sequence of color identifiers. Each color identifier may define one color value from a set of at least two color values.

According to other example embodiments, where the light emitting unit is capable of displaying more than two colors, each color identifier defines a color value from a set of two or more color values. For example, each color identifier may be represented by a color (e.g. as an RGB triplet) determined in accordance with a color scheme known in the art. Furthermore, in at least one embodiment, at least one pilot identifier may be embedded or otherwise included with the sequence of color identifiers.

According to at least one example embodiment where the to-be-transmitted data is formatted to the sequence of multi-level words, the mapping at 420 maps the sequence of multi-level words to an ordered sequence of a plurality of color identifiers. Each of the color identifiers corresponds to one of the multi-level words and the color value defined by that color identifier represents the value defined by the multi-level word. Each color identifier defines one color value from a set of a plurality of color values. The number of color values in the plurality of color values may correspond to the number of different values that can be represented by each multi-level word.

At 428, a display control signal is generated based on the sequence of color identifiers. The display control signal represents a signal that is readable by the microprocessor (e.g. microprocessor 102 of FIG. 1) and displayable by the light emitting device. For example, where the light emitting device has only an on and off state, the generated display control signal comprises a plurality of on-off signals that correspond to the on-off values of the sequence of color identifiers. In one embodiment, where the light emitting device comprises a two-dimensional display area, the generated display control signal defines a plurality of sub-areas of the display area, as well as the color to be displayed in each sub-area and the duration that the color is to be displayed in the sub-area.

At 432, the light emitting unit is controlled based on the display control signal so as to display at least one light signal. It will be appreciated that since the display control signal is generated from the sequence of color identifiers, the at least one light signal that is displayed is effectively based on the sequence of color identifiers. Furthermore, since the sequence of color identifiers corresponds to mappings of the to-be-transmitted data (whether formatted to multi-level words or not), the emitted light signal is representative of the original to-be-transmitted data (e.g. to-be-transmitted data 300 of FIG. 4 or FIG. 5). Where at least one pilot identifier is provided within the sequence of color identifiers to be transmitted, the light emitting unit also emits a pilot signal corresponding to the at least one pilot identifier in the course of displaying the at least one light signal, or as part of a separate setup or handshaking process.

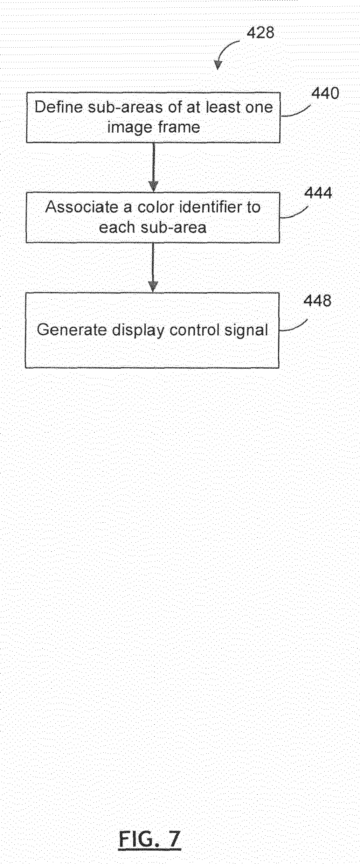

Referring now to FIG. 7, shown therein is a flowchart illustrating an example of acts performed at 428 of FIG. 6, for generating a display control signal based on a sequence of color identifiers mapped from multi-level words.

At 440, at least one image frame having a plurality of sub-areas is defined. Each of the at least one image frame comprises a plurality of sub-areas, each sub-area representing a portion of the displayable area of the image frame. For example, the size and position of each sub-area within the image frame may also be defined.

At 444, for each of the sub-areas of the at least one image frame, a given color identifier is associated to that sub-area. That is, each sub-area and each color identifier are associated in a one-to-one relationship: for each of the plurality of color identifiers, a color identified by the color identifier is associated to one of the plurality of sub-areas of the at least one image frame.

At 448, based on the association of the sub-areas to the color identifiers, the display control signal is generated. The display control signal comprises information regarding the at least one frame, the sub-areas of each of the frames, and the color to be displayed within each of the sub-areas, that color being the color value defined by the color identifier associated with that sub-area.

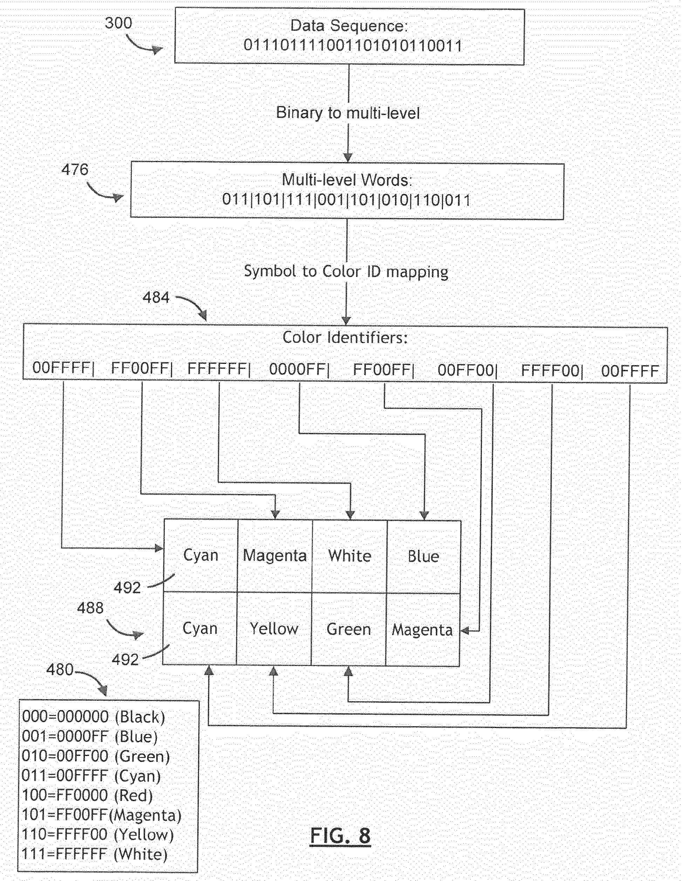

Referring now to FIG. 8, therein illustrated is a schematic diagram showing an example to-be-transmitted sequence 300 (see e.g. FIG. 4 or FIG. 5) of data being processed for transmission via a light emitting unit. An example to-be-transmitted data sequence is illustrated therein having 24 bits. The 24 bits are formatted by a multi-level formatting module (e.g. multi-level formatting module 178 of FIG. 5) so as to form a sequence of multi-level words 476, of eight data frames of three bits each. It will be appreciated that each 3-bit frame can represent eight different values.

Table 480 shows an example mapping of each 3-bit frame to an associated color identifier. As illustrated, and by way of example, the color identifiers are RGB triplets that define the colors black, blue, green, cyan, red, magenta, yellow and white. The color mapping module 174 (FIG. 4 or FIG. 5) maps the multi-level words 476 to a sequence 484 of color identifiers. A display control signal containing data that defines an image frame 488 having a 2-by-4 arrangement of sub-areas 492 is generated from the sequence of color identifiers. Each of the sub-areas is associated with one of the color identifiers, and displays a color defined by the color identifier associated to the corresponding sub-area 492.

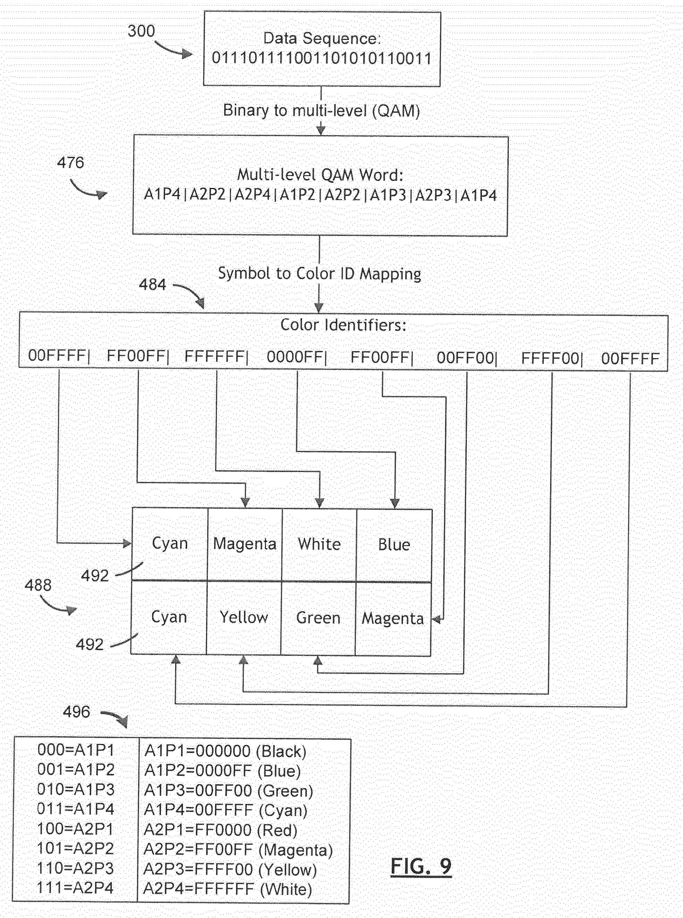

Referring now to FIG. 9, therein illustrated is a schematic diagram showing another example to-be-transmitted data sequence 300 of data being processed for transmission via a light emitting unit. Similar to the example of FIG. 8, an example to-be-transmitted sequence 300 of data has 24 bits. Each 3-bit data frame of the data sequence 300 is formatted by a multi-level formatting module (e.g. multi-level formatting module 178 of FIG. 5) so as to form a sequence of multi-level words 476 of combination states.

As illustrated, the combination states are each defined by an amplitude value and a phase value (e.g. real and complex symbols). It will be appreciated that a QAM scheme may be used to generate combinations of an amplitude value and a phase value. Table 496 shows a mapping of each 3-bit frame to an associated combination state forming a multi-level word. Table 496 further shows a mapping of each combination state to a color identifier. Similar to FIG. 8, and by way of example, the color identifiers are RGB triplets that define the colors black, blue, green, cyan, red, magenta, yellow and white.

A color mapping module 174 (FIG. 4 or FIG. 5) maps the multi-level words 476 to a sequence 484 of color identifiers. A display control signal containing data that defines an image frame 488 having a 2-by-4 arrangement of sub-areas 492 is generated from the sequence of color identifiers. Each of the sub-areas is associated with one of the color identifiers, and displays a color defined by the color identifier associated to the corresponding sub-area 492.

Further details associated with an example recipient computing device will now be described.

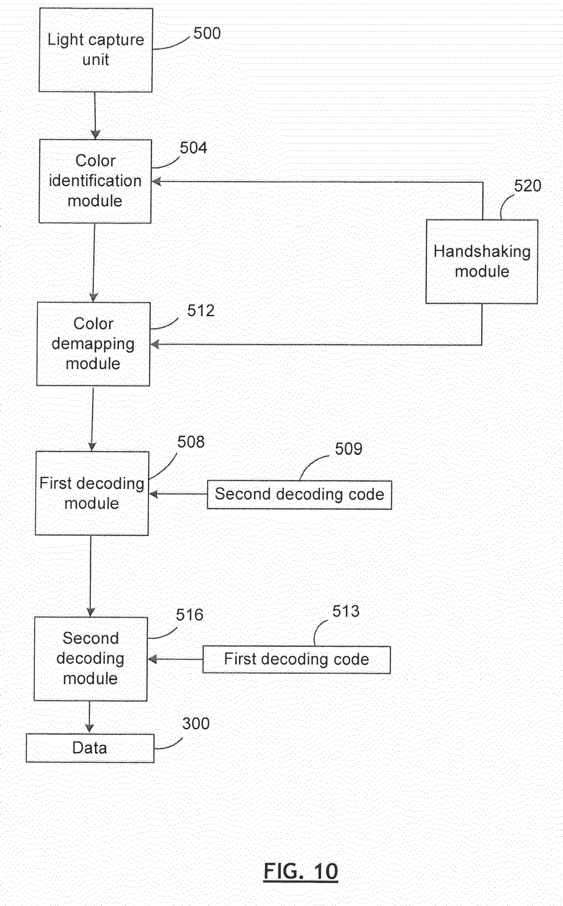

Referring to FIG. 10, therein illustrated is a block diagram showing an example of data interconnections of an example recipient computing device with a light capture unit 500, color identification module 504, first decoding module 508, color demapping module 512, second decoding module 516, and receiver-side handshaking module 520. The data interconnections correspond to where a computing device, such as a mobile device (e.g. mobile device 100 of FIG. 1), is acting as the recipient computing device that receives a transmission.

The recipient computing device generally captures the light signal emitted from a transmitting computing device (e.g. via an image displayed on a display screen of the transmitting computing device), processes the captured the light signal, and inverses or otherwise undoes any encoding applied to the data as transmitted by the transmitting computing device, in order to recover the original to-be-transmitted data (e.g. 300 of FIG. 4 or FIG. 5).

The light capture unit 500 is a component that is sensitive to variations in light so as to generate a measurable signal therefrom. For example, the light capture unit 500 may comprise a camera unit (e.g. camera unit 148 of FIG. 1), which may acquire one or more images of light passing through a lens sub-unit (e.g. 154 of FIG. 1) of the camera unit. The light capture unit, when properly oriented, is operable to capture the light signal displayed by the light emitting unit of the transmitting computing device, the light signal having been generated based on the data that was processed by the transmitting computing device and then transmitted as a light signal. The light capture unit of the recipient computing device then generates a signal representative of the captured light signal. For example, where the light capture unit is a camera unit of the recipient computing device, the generated signal at the transmitting computing device may include one or more digital images or video.

The signal generated by the light capture unit 500 is received at the color identification module 504. The color identification module 504 is operable to identify a plurality of color values included in the generated signal and extract therefrom a plurality of mapped color identifiers. The color identification module 504 may extract the plurality of mapped color identifiers based on transmission parameters defined by the handshaking module 520 at the recipient computing device, shown in FIG. 10. For example, the plurality of mapped color identifiers may be in the form of an ordered sequence of color identifiers.

The handshaking module 520 shown in FIG. 10 may communicate with the transmitter-side handshaking module (e.g. 308 of FIG. 4 or FIG. 5) of a transmitting computing device so as to co-operatively define parameters of a transmission. Like the handshaking module of the transmitting computing device, the handshaking module 520 of the recipient computing device may define, or assist in defining, parameters for transmission of the light signal by the transmitting computing device.

For example, handshaking module 520 may be operable to control other components of the recipient computing device so as to sense ambient conditions of the environment surrounding the recipient computing device. The ambient conditions may include ambient light conditions, such as color temperature. The handshaking module 520 of the recipient computing device may also communicate with the transmitting computing device to receive one or more characteristics of the transmitting computing device. For example, the receiving handshaking module 520 may receive information relating to technical capabilities of the light emitting unit of the transmitting computing device.

The handshaking module 520 may be configured to identify or otherwise define properties associated with the light signal that was transmitted by the transmitting computing device, such as an identification of the set of color values represented in the plurality of color values on which the colors displayed within the light signal emitted by the transmitting computing device are based. The handshaking module 520 may also assist in defining data that identifies a correspondence between each color value of the set of color values to a data value. The parameters may also define the duration of sub-components of the light signal, such as frame rate.

According to one example embodiment, the transmission parameters may be defined based on at least one sensed ambient condition and/or at least one characteristic of the intended recipient computing device.

The set of color values defined by the handshaking module 520 can be received at the color identification module 504.

The light signal generated by the light capture unit 500 may encode data that defines a plurality of raw color values. For each of the raw color values identified by the color identification module 504, the module 504 can further map the raw color value to one color value from the set of color values as identified by the handshaking module 520. For each of the mapped color values, the color identification module 504 can further determine the color identifier associated with the mapped color value, thereby generating a sequence of color identifiers.

The sequence of color identifiers is received at the color demapping module 512. The color demapping module 512 demaps the plurality of color identifiers to generate a corresponding data sequence. The demapping of the sequence of color identifiers to the data sequence may be based on parameters defined by the handshaking module 520. In particular, the demapping may be based on the correspondence of each color value of the set of color values to a possible unit of data or group of units of data. Accordingly, the act of demapping comprises generating the data value corresponding to the color value defined by each of the color identifiers of the sequence of color identifiers obtained from the received transmission.

In at least one embodiment, the data generated by the color demapping module 512 is then received at a first decoding module 508, whereat the first decoding module 508 decodes the plurality of color identifiers based on a second decoding code 509. The second decoding code 509 corresponds to the second encoding code (e.g. the corresponding scrambling code or second encoding code 312 of FIG. 4 or FIG. 5) that was used by the transmitting device to encode the plurality of color identifiers generated by the color mapping module 174. It will be understood that according to other example embodiments where a corresponding second encoding code had not been applied by the transmitting computing device, the data generated by the color demapping module 512 would not be decoded using the second decoding code 509.

It will be appreciated that where the second decoding code 509 is not known by the recipient computing device, the plurality of color identifiers cannot be properly decoded, thereby preventing the recipient computing device from retrieving the underlying data sequence that the transmitting computing device was attempting to communicate to the recipient computing device.

The data decoded by the first decoding module 508 is received at a second decoding module 516, whereat the second decoding module 516 decodes the data based on a first decoding code 513. The first decoding code 513 corresponds to the first encoding code (e.g. first encoding code 304 of FIG. 4 or FIG. 5) that was used by the transmitting computing device to originally encode the data (e.g. corresponding to the spreading code used to encode to-be-transmitted data 300 of FIG. 4 or FIG. 5). It will be understood that according to other example embodiments where the corresponding first encoding code had not been applied by the transmitting computing device, the data generated by the color demapping module 512 (e.g. via first decoding module 508) would not be decoded by the first decoding code 513.

It will be appreciated that where the first decoding code 513 is not known by the recipient computing device, the data cannot be properly decoded, thereby preventing the recipient computing device from retrieving the underlying data sequence that the transmitting computing device was attempting to communicate to the recipient computing device.

Where the color identification module 504 correctly identifies and maps the color identifiers, and the first and second decoding modules 508, 516 use the correct first and second decoding codes 513, 509, the decoded data outputted by the second decoding module 516 should correspond to the data (e.g. the to-be-transmitted data 300 of FIG. 4 or FIG. 5) that the transmitting computing device was attempting to communicate to the recipient computing device, thereby representing a situation where the recipient computing device is able to successfully receive the data sequence.

In at least one embodiment, the handshaking module 520 may also identify or otherwise define at least one pilot identifier. The pilot identifier defines a portion of the light signal that represents values that are known in advance to both the transmitting computing device and the intended recipient computing device. The at least one pilot identifier may be useful for identifying whether the light signal emitted by the intended recipient computing device is being properly captured. In general, pilot identifiers may be used to improve signal reception quality, in bidirectional communications, and to aid in time/frame synchronization. According to various example embodiments (see e.g. the description on pilot identifiers with reference to FIG. 4), the color identification module 504 is operable to extract the at least one pilot identifier from a signal generated by the light capture unit 500. The extracted at least one pilot identifier can be compared with the at least one pilot identifier expected at the recipient computing device to determine whether the emitted light signal is being properly captured by the light capture unit 500.

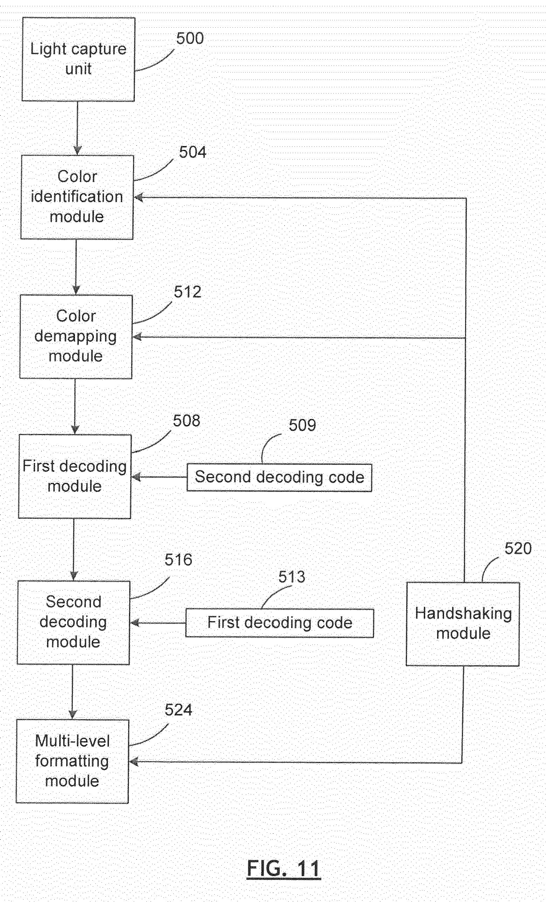

Referring now to FIG. 11, therein illustrated is a block diagram showing an example of data interconnection of a recipient computing device having a light capture unit 500, color identification module 504, first decoding module 508, color demapping module 512, second decoding module 516, receiver handshaking module 520 and multi-level demodulation module 524. The data interconnections of FIG. 11 are similar to those of FIG. 10 with slight modifications and the addition of the multi-level demodulation module 524. The reader is directed to the description of FIG. 10 for further details on analogous elements represented in FIG. 11.

According to the example of FIG. 11, the light capture unit 500 captures at least one two-dimensional image frame that comprises a plurality of colored sub-areas.

The color identification module 504 is operable to identify the individual sub-areas and the color of each of the sub-areas. From the identified sub-areas and their respective colors, the color identification module 504 is further operable to extract a sequence of mapped color identifiers. The color identification module 504 may extract the sequence of mapped color identifiers based on transmission parameters defined by the handshaking module 520 of the recipient computing device. For example, the color identification module 504 may include image processing of the captured at least one two-dimensional image frame to identify the sub-areas and the color of each sub-area.

Furthermore, the color demapping module 512 demaps the sequence of color identifiers to generate a plurality of multi-level words. The demapping of the sequence of color identifiers to the data sequence may be based on parameters defined by the handshaking module 520. In particular, the demapping may be based on the correspondence of each color value of the set of the color values to a possible value defined by the multi-level word. Accordingly, demapping involves generating the multi-level word corresponding to the color value defined by each of the color identifiers of the sequence of color identifiers, thereby forming a plurality of multi-level words.

The plurality of multi-level words is then received, potentially after decoding, at the multi-level formatting module 524, which further demodulates or demaps the plurality of multi-level words to produce output data. For example, where the original data (e.g. the to-be-transmitted data 300 of FIG. 5) was formatted to a plurality of combinations of real and complex values by the multi-level formatting module 178 (FIG. 5) of the transmitting computing device, the demodulating performed by multi-level demodulation module 524 comprises applying a demodulation scheme that is an inverse of the formatting applied by the multi-level formatting module 178. The output of the multi-level demodulation module 524 is data that corresponds to the original data that the transmitting computing device was attempting to communicate to the recipient computing device.

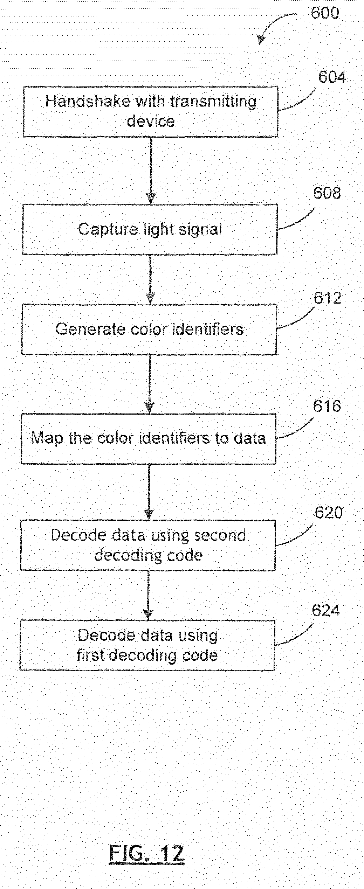

Referring now to FIG. 12, shown therein is a flowchart illustrating an example embodiment of a method 600 for receiving data transmitted via a light emitting unit of a transmitting computing device. The method 600 may be carried out by a controlling component of a computing device, such as a processor, embodied as a microprocessor. The method 600 may be carried out by the microprocessor as it is enabling execution of software applications. Certain details of method 600 were previously described with reference to FIG. 10 or FIG. 11, and the reader is directed to the description of those Figures, which is to be incorporated into the description of FIG. 12. Features described with reference to FIG. 12 may also be applicable to the examples of FIG. 10 and/or FIG. 11.

At 604, handshaking with the transmitting computing device is carried out so as to define parameters of the transmission. The handshaking at 604 may include identifying or otherwise defining parameters of the light signal that is transmitted by the transmitting computing device. The handshaking at 604 may include controlling other components of the recipient computing device so as to sense ambient conditions of the environment surrounding the recipient computing device. The ambient conditions may include ambient light conditions, such as color temperature. The handshaking at 604 may also include communicating with the transmitting computing device to receive one or more characteristics of the transmitting computing device. For example, the handshaking at 604 may include receiving information relating to technical capabilities of the light emitting unit of the transmitting computing device.

Conducting the handshaking at 604 may include identifying properties of the light signal transmitted by the transmitting computing device, such as the set of color values represented in the plurality of color values, which also represent the colors that might be displayed within the light signal. The parameters may also include data that can be used to determine a correspondence between each color value of the set of color values to a data value. The parameters may also define the duration of sub-components of the light signal, such as frame rate.

According to one example embodiment, the transmission parameters may be defined based on at least one sensed ambient condition and/or at least one characteristic of the transmitting computing device.

It will be understood that handshaking does not need to be carried out in every iteration of receiving method 600. For example, the receiving method 600 may be carried out using predetermined (e.g. default) transmission parameters or transmission parameters determined in a previous instance of the transmitting method.

At 608, the light signal emitted from the light emitting unit of the transmitting computing device is captured. A signal representative of the captured light signal is further generated. For example, where the light signal is captured by a camera unit (e.g. 148 of FIG. 1) of a recipient computing device, the generated signal may include one or more digital images and/or video.

At 612, a sequence of color identifiers is generated. More specifically, a plurality of color values is identified from the signal generated from capturing the light signal, and a sequence of mapped color identifiers is extracted. The sequence of mapped color identifiers may be extracted based on transmission parameters defined by a handshaking module at the recipient computing device (e.g. handshaking module 520 of FIG. 10 or FIG. 11).

The light signal generated from capturing the light signal at 608 may include a plurality of raw color values. For each of the raw color values identified, the act of generating the sequence of color identifiers at 612 further includes mapping the raw color value to one color value from the set of color values defined from the handshaking at 604. For each of the mapped color values, the generating at 612 may further include determining the color identifier defining the mapped color value, thereby generating a plurality of color identifiers.

At 616, a demapping is applied to the sequence of color identifiers to generate data. The demapping of the sequence of color identifiers to the data may be based on parameters defined by the handshaking at 604. In particular, the demapping may be based on the correspondence of each color value of the set of color values to a possible value of a unit data or a group of units of data. Accordingly, demapping includes generating the data value corresponding to the color value defined by each of the color identifiers of the sequence of color identifiers.

At 620, the data generated at 616 is decoded based on a decoding code (e.g. second decoding code 509 of FIG. 10). This decoding code corresponds to a scrambling or other encoding code (e.g. second encoding 312 of FIG. 4) used at the transmitting computing device for encoding the sequence of color identifiers (also see e.g. FIG. 6). It will be understood that according to other example embodiments where a corresponding second encoding code had not been applied by the transmitting computing device, the data would not be decoded by the second decoding code at 620.

At 624, the data generated at 616 is further decoded based on another decoding code (e.g. first decoding code 513 of FIG. 10). This decoding code corresponds to a spreading or other encoding code (e.g. first encoding code 304 of FIG. 4) used to encode the original data at the transmitting computing device, as described herein with reference to FIG. 6. It will be understood that according to other example embodiments where a corresponding first encoding code had not been applied by the transmitting computing device, the data would not be decoded by the first decoding code at 624.

It will be appreciated that where a particular decoding code is not known by the recipient device, the data cannot be properly decoded, thereby preventing the recipient computing device from retrieving the underlying data sequence that the transmitting computing device was attempting to communicate to the recipient computing device.

In general, where the color identifiers are correctly identified and mapped at 612, and correct decoding codes (e.g. first and second decoding codes 513, 509 of FIG. 10 or FIG. 11) are used at 616 and 624, the decoded sequence outputted at 624 should correspond to the original data (e.g. the to-be-transmitted data 300 of FIG. 4) that the transmitting computing device was attempting to communicate to the recipient computing device, thereby representing a situation where the recipient computing device is able to successful receive the data.

According to various example embodiments, the handshaking at 604 may further include defining at least one pilot identifier. The pilot identifier defines a portion of the light signal that represents values that are known in advance to both the transmitting computing device and the intended recipient computing device. The at least one pilot identifier is useful for identifying whether the light signal emitted by the intended recipient device is being properly captured. According to various example embodiments, method 600 further includes extracting the at least one pilot identifier from the signal generated from the capturing of the light signal at 608 (not explicitly shown in FIG. 12, although this act may be performed, for example, at 612). The extracted at least one pilot identifier is further compared with the at least one pilot identifier expected by the recipient computing device (e.g. this may be checked at the handshaking act performed at 604 or in a separate act now shown in the figure) to determine whether the emitted light signal is being properly captured at 608.

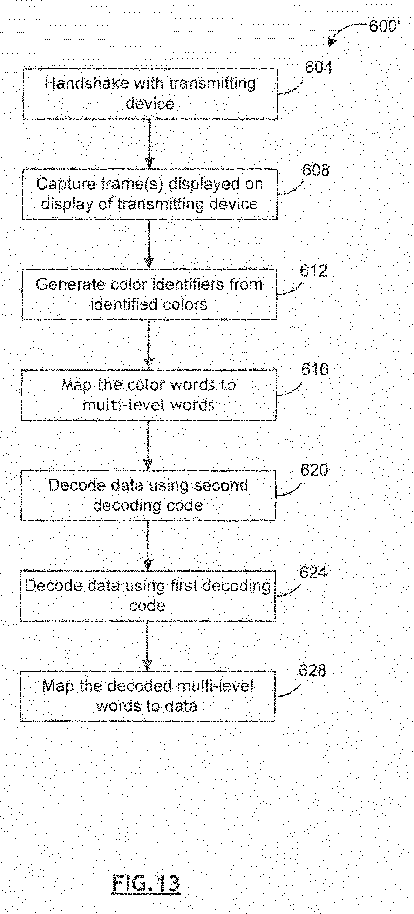

Referring now to FIG. 13, shown therein is a flowchart illustrating an example embodiment of a method 600' for receiving a data sequence transmitted via a light emitting unit. Method 600' closely resembles method 600 illustrated in FIG. 12 but the mapping of color identifiers at 620 produces, specifically, an output comprising a plurality of multi-level words. The reader is directed to the description of FIG. 12 for further details on analogous elements represented in FIG. 13.

The method 600' further comprises mapping (also referred to as "demapping" or demodulating herein), at 628, the plurality of multi-level words to output data. For example, where the original data (e.g. the to-be-transmitted data 300 of FIG. 5) was originally formatted at the transmitting computing device to a plurality of combinations of real and complex symbols, the mapping act at 628 comprises applying a demodulation scheme that is an inverse of the formatting applied by the multi-level formatting at the transmitting computing device. The output of the demodulation at 628 is data that corresponds to the original data.

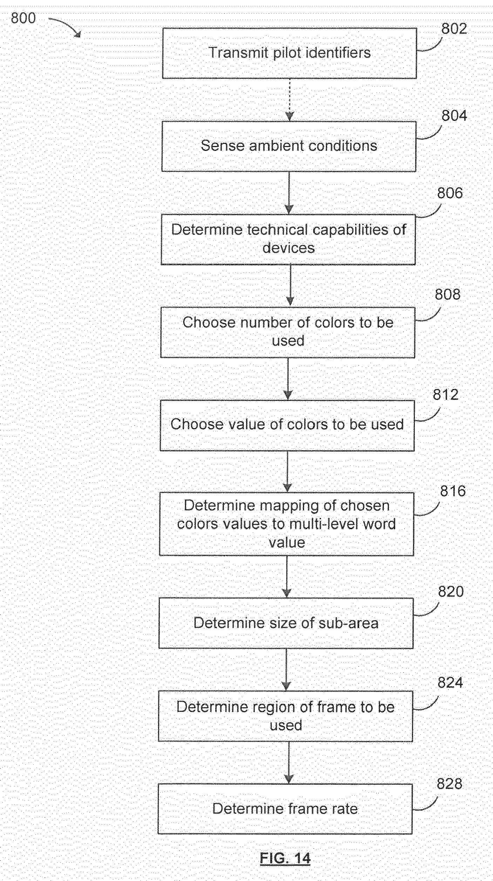

Referring now to FIG. 14, shown therein is a flowchart illustrating an example embodiment of a method 800 for handshaking in order to determine parameters of a transmission. The method may correspond to the handshaking carried out at 408 of method 400, for example. These acts may be performed, for example, by a microprocessor (e.g. 102 of FIG. 1) in accordance with instructions defined in a handshaking module (e.g. 308 of FIG. 4 or FIG. 5) or some other control module.

At 802, at least one pilot identifier to be transmitted as part of a transmitted light signal from the transmitting computing device to a recipient computing device is determined. This can be performed as part of the handshaking process or as a part of a separate setup process. The pilot identifier defines a portion of the light signal that represents values that are known in advance to both the transmitting device and the intended recipient device. Feedback data provided by the recipient computing device to the transmitting computing device with respect to whether certain pilot identifiers have been properly captured may be used in a determination of one or more properties in the acts of method 800.

At 804, ambient conditions of the environment surrounding the transmitting computing device and/or the recipient computing device are sensed. The ambient conditions may include ambient light conditions, such as color temperature. It will be understood that sensing ambient conditions is optional, and according to some embodiments, this act will be omitted.

At 806, the technical capabilities of the transmitting computing device and the recipient computing device are determined. In particular, at 806, the light emitting capabilities of the transmitting computing device and the image capture capabilities of the recipient computing device are estimated or determined. Light emitting capabilities may depend on the various units of the transmitting computing device that are operable to emit light and the characteristics of the light that can be emitted from each of the units. These characteristics may include brightness, resolution, and/or dynamic color range. Image capture capabilities may include color and/or resolution (e.g. in megapixels).

At 808, the number of colors to be used (e.g. for displaying color sequences) is determined. This determination may be based on technical capabilities determined at 806 and/or ambient conditions sensed at 804. For example, the number of colors in the set of possible colors used in a transmission may be two, four, eight, sixteen, etc.

At 812, the set of colors to be used in the transmission are determined. For example, the set of colors may be chosen to increase the hamming distance between each member of the set. It will be appreciated that choosing a smaller number of colors at 808 can increase the hamming distance between each color, thereby allowing for more accurate identification of the colors by the recipient computing device and decreasing errors in identification; on the other hand, utilizing a larger number of colors at 808 can potentially allow more information to be transmitted at a given instant (there are a larger number of unique values to which data can be mapped), but this would decrease the hamming distance between colors, thereby increasing probability of errors when the recipient computing device attempts to distinguish between different colors in an image being captured.

At 816, the mapping of the chosen colors to data sequence values is determined. That is, each color is mapped to a given unit of data or group of units of data (e.g. one or more bits or characters) in a one-to-one relationship. Where the data is formatted to a multi-level word, each color is mapped to a given one of the multi-level words such that each of the possible multi-level words is mapped to at least one unique color.

According to various example embodiments where the light signal emitted by the transmitting computing device is a two-dimensional signal that includes at least one frame, at 820, the size of each sub-area (or "pixel area" used to display one given color) within the at least one frame is determined. It will be appreciated that having larger sized sub-areas (each representing a greater portion of an image frame) may allow for more accurate identification, by the recipient device, of a color displayed in a given sub-area; however, this also decreases the number of sub-areas shown per image frame. Having smaller-sized sub-areas (each representing a smaller portion of an image frame) allows for more sub-areas to be shown per image frame, and thus more information can be encoded within a given image frame; however, the use of smaller sub-areas may also increase the probability of inaccurate identification of the color displayed in a sub-area.

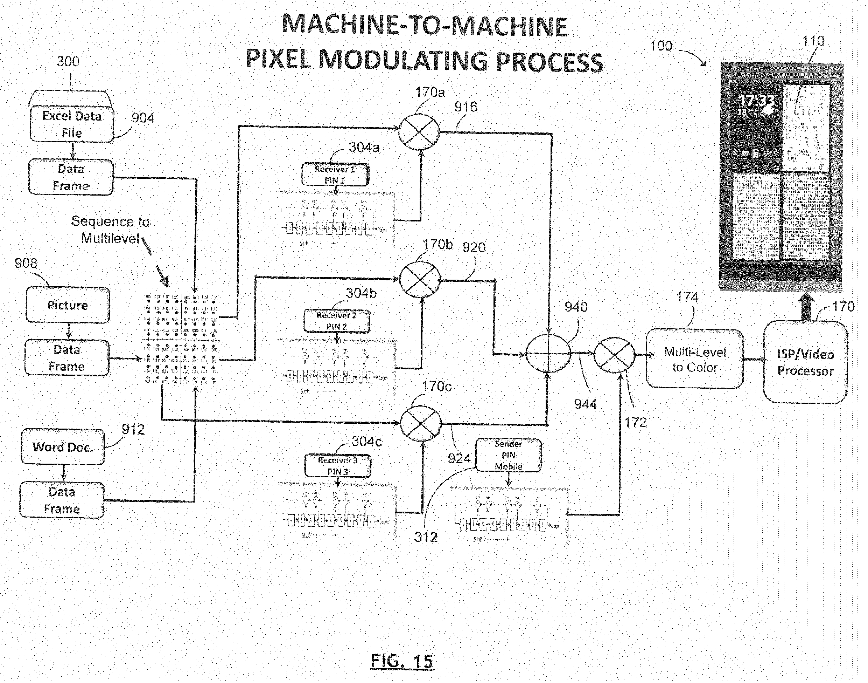

At 824, the regions of the frame to be used for the transmission are determined. A region of the frame refers to a contiguous portion of the frame representing less than the whole frame that is used for the transmission. A region may allow for the display of a plurality of sub-areas within it. Two or more regions of the same frame may be used for concurrent transmission to multiple users, as will be further described herein (e.g. with reference to FIGS. 15 to 19).

At 828, the frame rate of the light signal to be emitted by the light emitting unit of the transmitting device is determined. The frame rate may define the duration for which each color value of the light emitting unit is displayed before a subsequent color value is displayed. Where the light signal comprises a plurality of two-dimensional image frames, the frame rate defines the duration for which one image frame is displayed before a subsequent image frame is displayed.

Although the acts of method 800 have been described primarily from the perspective of the transmitting computing device, persons skilled in the art will understand that in variant implementations, certain acts may be wholly or primarily carried out by the transmitting computing device, or the recipient computing device, or both. In one variant implementation, a portion of the method 800 is carried out by the transmitting computing device while the remainder of method 800 is carried out by the recipient computing device.

However, it will be understood that at least some handshaking acts will generally involve some communication between the transmitting computing device and the recipient computing device, such that transmission parameters chosen or determined by one device, or other feedback data (e.g. relating to the transmission or capturing of pilot signals), is communicated to the other device. As a result, the same set of transmission parameters will typically become known by both the transmitting computing device and the recipient computing device prior to the transmission of the light signal encoding data that is to be transmitted from the transmitting computing device to the recipient computing device.

Referring now to FIGS. 15 to 17, shown therein are schematic diagrams showing the data interconnections for a data transmission to multiple recipients according to various example embodiments. In such example embodiments, the to-be-transmitted data sequence 300 includes at least a first data sub-sequence and a second data sub-sequence, which are each to be transmitted to different intended recipient computing devices. As illustrated, and by way of example, the to-be-transmitted data 300 includes a first data sub-sequence 904, a second data sub-sequence 908, and a third data sub-sequence 912.

In at least one embodiment, each data sub-sequence may be mapped to a separate plurality of multi-level words. As illustrated, and by way of example, the first data sub-sequence 904, the second data sub-sequence 908, and the third data sub-sequence 912 are mapped to multi-level words according to a QAM table. For example, each sub-sequence may correspond to a different phase range of the generated QAM signal. In other example embodiments, a first data sub-sequence 904 may form part of the Q-channel while a second data sub-sequence 908 forms part of the I-channel.

Each data sub-sequence is encoded based on an identifier associated with the intended recipient of the particular data sub-sequence. Typically, there will only be one intended recipient of a particular data sub-sequence but in variant embodiments, there may be more than one intended recipient for the same data sub-sequence. In one embodiment, the identifier associated with a given recipient computing device is unique to that device. Accordingly, each data sub-sequence may be encoded based on a different encoding code, so that the data sub-sequence can later be decoded by only the intended recipient computing device. The encoding may be performed on the data sub-sequences, or on the data sub-sequences after having been mapped to multi-level words.

For example, and as illustrated, the first data sub-sequence 904 after having been mapped to a first plurality of multi-level words 916 is encoded by a first encoding sub-module 170a based on the identifier (e.g. PIN 304a) of a first intended recipient computing device, the second data sub-sequence 908 having been mapped to a second sequence of multi-level words 920 is encoded by a second encoding sub-module 170b based on the identifier (e.g. PIN 304b) of a second intended recipient computing device, and the third data sub-sequence 912 having been mapped to third sequence of multi-level words 924 is encoded by a third encoding sub-module 170c based on the identifier (e.g. PIN 304c) of a third intended recipient computing device.

In one embodiment, the encoding of the various sequences and/or sub-sequences employs codes (e.g. spreading codes such as Walsh codes) that are mathematically orthogonal to one another. The orthogonal codes are used as a way to channelize the data associated with different data files, which could be associated with different users or recipients.

In the embodiment described with reference to FIG. 15,, the plurality of multi-level words 916 (e.g. encoded with an encoding code selected based on PIN 304a), the plurality of multi-level words 920 (e.g. encoded with an encoding code selected based on PIN 304b), and the plurality of multi-level words 924 (e.g. encoded with an encoding code selected based on PIN 304c), are combined (e.g. summed by a summer 940) so as to form a combined data sequence 944. The data may then be further encoded based on a second encoding code 312. For example, and as illustrated, the data is encoded by second encoding module 172 using a scrambling code that is based on an identifier (e.g. PIN 312) of the transmitting computing device.

The combined data sequence is then mapped (e.g. based on transmission parameters) to a corresponding sequence of color identifiers at 174. The sequence of color identifiers 944 is then received at a light signal generating module (e.g. 176 of FIG. 4 or FIG. 5), which generates a display control signal for controlling the light emitting unit to emit a light signal. In the illustrated example, the light emitting unit is a display of the transmitting computing device (e.g. display 110 of mobile device 100), and the display control signal is processed by video processor 170 to display images corresponding to the sequence of color identifiers 944.

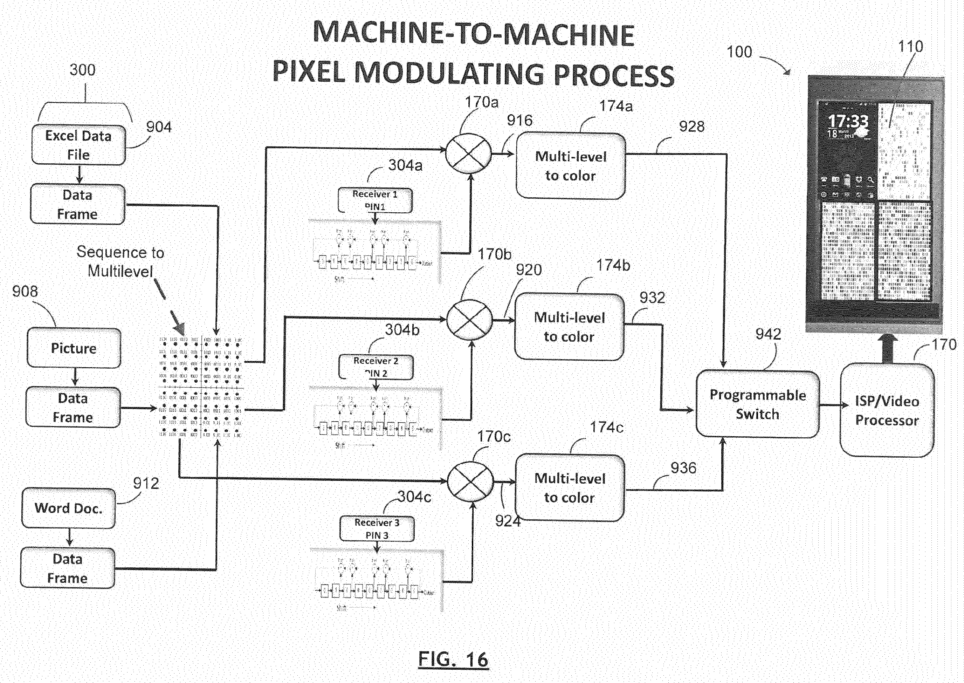

In the embodiment described with reference to FIG. 16, the different pluralities of encoded multi-level words are independently mapped to corresponding sub-sequences of color identifiers 928, 932, 936 at 174a, 174b, 174c respectively. In this embodiment, no encoding using the second encoding code is performed. The sub-sequences 928, 932, 936 are provided to a programmable switch 942, which may be configured by the processor of the transmitting computing device to display a corresponding light signal for a sub-sequence in a particular region on display 110. In some implementations, input received via a user interface of device 100 (e.g. touch input) may be employed to direct that the light signal corresponding to a particular color sub-sequence associated with a particular data file (e.g. 300, 908, 912) be displayed in a user-specified region of display 110. The switch 942 may be configured to similarly direct that light signals corresponding to other color sub-sequences be displayed in different, potentially user-specified, regions of display 110. Default assignments of the regions may also be employed. In any event, a sub-sequence of color identifiers 928, 932, 936 is received at a light signal generating module (e.g. 176 of FIG. 4 or FIG. 5), which controls video processor 170 to display images corresponding to one or more of the sub-sequences of color identifiers.

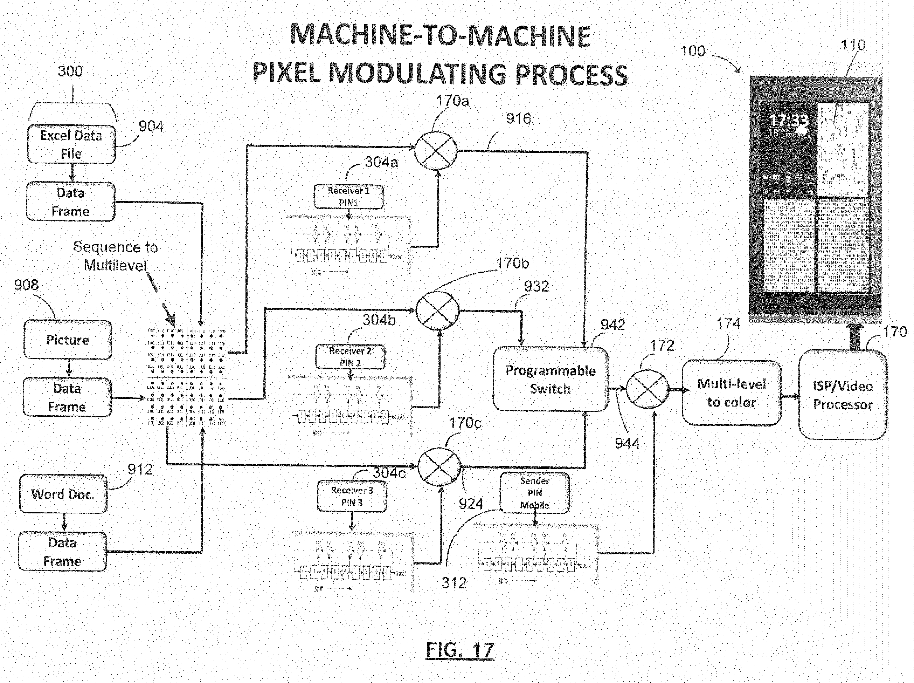

In the embodiment described with reference to FIG. 17, the plurality of multi-level words 916 (e.g. encoded with an encoding code selected based on PIN 304a), the plurality of multi-level words 920 (e.g. encoded with an encoding code selected based on PIN 304b), and the plurality of multi-level words 924 (e.g. encoded with an encoding code selected based on PIN 304c), are provided directly to switch 942, which may be configured as generally described with reference to FIG. 16. However, in this embodiment, any data to be transmitted is encoded by second encoding module 172 using a scrambling code that is based on an identifier (e.g. PIN 312) of the transmitting computing device. The data to be transmitted can then be mapped (e.g. based on transmission parameters) to a corresponding sequence of color identifiers at 174. The sequence of color identifiers is then received at a light signal generating module (e.g. 176 of FIG. 4 or FIG. 5), which controls video processor 170 to display images corresponding to the particular sub-sequence of color identifiers 944 as may be output by switch 942.

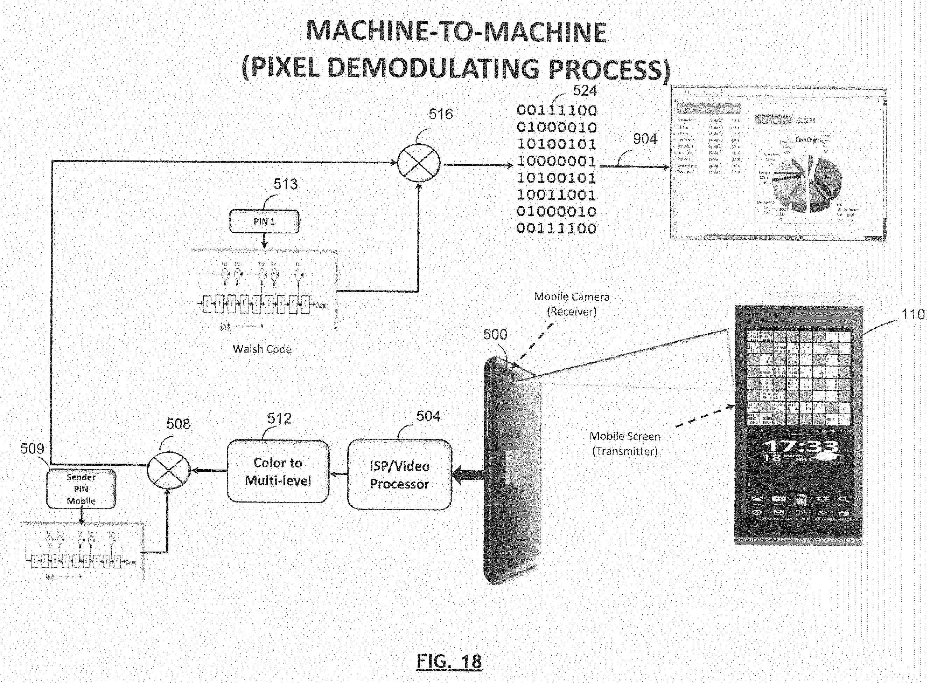

Referring now to FIG. 18, shown therein is a schematic diagram showing the data interconnections for a receiving side of a transmission according to various example embodiments. The light capture unit 500 of a recipient computing device (e.g. of the mobile device type, such as 100 of FIG. 1) captures the light signal being emitted by the light emitting unit of the transmitting computing device. As illustrated, the light capture unit 500 is a camera unit of the recipient computing device and captures the two-dimensional image frame(s) being displayed on the display 110 of the transmitting computing device.

The signal generated by the light capture unit 500 is processed by a video processor 504 and received at a color identification module 512, which identifies a plurality of color values and extracts a plurality of mapped color identifiers, to generate (e.g. via a demapping process) a corresponding sequence of multi-words that was embedded in the signal.

In this example, a first decoding module 508 decodes the sequence of multi-level words based on a second decoding code 509. As illustrated, the second decoding code 509 is the PIN of the transmitting computing device. A second decoding module 516 further decodes the sequence of multi-level words based on a first decoding code 513. In the illustrated example, the transmission is a multi-level transmission and only a portion of the transmission is intended to be received by a recipient computing device. As further illustrated, the first decoding code 513 is the identifier (see e.g. PIN 304a of FIG. 15) of the first intended recipient computing device, thereby allowing correct decoding only of the portion of the data sub-sequence that was encoded based on that identifier. Accordingly, the output of the second decoding module 516, if properly obtained, is the first data sub-sequence 904 (FIGS. 15 to 17).

In the example illustrated, the output of the second decoding module 516 is the first sequence of multi-level words. Accordingly, a multi-level demodulation module 524 demodulates the first sequence of multi-level words so as to obtain the first data sub-sequence 904. In this particular example, the first data sub-sequence 904 is associated with a spreadsheet file.

It will be appreciated that FIG. 18 only illustrates the modules of one recipient computing device of a transmission to multiple recipients as depicted in FIGS. 15 to 17. Accordingly, only a portion of the captured light signal is intended to be read by that recipient device. It will be further appreciated that other portions of the captured light signal can be processed by other recipient computing devices (e.g. the second intended recipient computing device and the third intended recipient computing device) in analogous manner. Each of the other recipient computing devices may further decode and retrieve the data sub-sequences intended for that device in a manner analogous to the flow of operations depicted in FIG. 18.

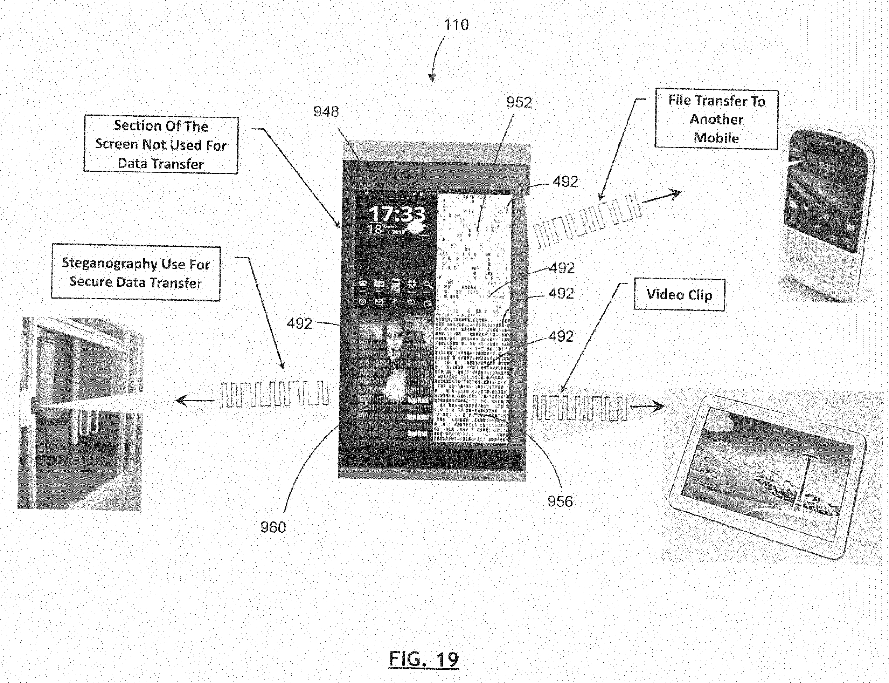

Referring now to FIG. 19, therein illustrated is a schematic diagram of an example wherein a transmitting computing device transmits data contemporaneously to multiple recipient computing devices. As illustrated, and by way of example, a first region 948 of the display 110 is not used for transmission of data. A given section of the screen might have been assigned by the user of the transmitting computing device to support certain applications, a clock, a family picture, etc. that are to remain accessible even during transmission of data in accordance with an embodiment described herein. In these embodiments, only a strict subset of the area on a display is made available to send data. However, it is also possible in an alternate implementation to make the entire screen available for data transmission during this process, and after it is completed, automatically reset the screen to a previous state.

In this example, a second region 952 of the display 110 is used to display image frames having colored sub-areas 492 corresponding to the first data sub-sequence 904 and for transmitting to a first recipient computing device 100, which may be another mobile device. A third region 956 of the display 110 is used to display image frames having colored sub-areas 492 corresponding to a second data sub-sequence 908 and for transmitting to a second recipient computing device 100, which may be a tablet device, for example. A fourth region 960 of the display 110 is used to display image frames having colored sub-areas 492 corresponding to a third data sub-sequence 912 and for transmitting to a third recipient computing device 100, which may be a security system, for example.

According to a variant embodiment, the light signal emitted from one or more of the regions may have a specialized image encryption technique or other additional security features applied thereto. For example, and as illustrated, a steganographic technique has been applied, by concealing the data representing the transmitted data signal within some other data, such as an unrelated image (e.g. as depicted in the fourth region 960 of FIG. 17). This may assist in preventing unauthorized interception and decoding of the transmitted data encoded in the image. As a further example, an encryption technique (e.g. in addition to the encoding techniques previously described) may be applied at the second encoding module 172 or other module of the transmitting computing device, to data prior to the display of the representation of the data.

Referring now to FIG. 20, therein illustrated is a schematic diagram of a plurality of sub-areas or pixel areas 492. This represents the area in which one color of any given color sequence is to be displayed. According to one example embodiment, the transmission parameters defined through handshaking defines the size of each pixel area of the at least one frame by pixel length and pixel width. As previously noted, increasing the pixel area may allow recipient computing devices to more easily distinguish one element in a sequence of colors from other elements of the sequence of colors, although in general, the larger the pixel area, the lower the rate at which data can be transmitted. To further assist in allowing colors in a color sequence to be resolved, each pixel area may be bound by a border 493.

The transmission parameters may define a width for the border 493. The border 493 represents areas of the at least one image frame that provides a separation from an adjacent sub-area 492.

As illustrated, and by way of example, the sub-area 492 of FIG. 20 has a length of 32 pixels and a width of 32 pixels (the dimensions of each box being four pixels by four pixels). Furthermore, the border 493 shown in black has a width of eight pixels. These dimensions are provided by way of example only. Accordingly, the image frame 488 shown comprises eight sub-areas being delineated by the black borders.

In one example, using the 32 pixel by 32 pixel sub-areas with a border of eight pixels and a display having a high definition resolution of 1920 x 1080, a set of eight color values and a frame rate of 30 frames per second, it is possible to achieve a data transfer rate of 116,640 bits per second:

$$\frac{1920 * 1080}{(32 + 8) * (32 + 8)} * 3 * 30 = 116,640$$

In at least one embodiment, image frames comprising multiple sub-areas may be displayed in the form of pilot signals. Different sized sub-areas (e.g. either in parallel or in sequence), may be displayed at the transmitting computing device, and the size of each sub-area may be changed dynamically. The recipient computing device can then provide feedback to the transmitting computing device, to indicate what minimum sizes are sufficient that would still allow the pilot identifiers to be properly read at the computing device and processed. This process may be repeated to determine an optimal sub-area size in different operating conditions or environments. In this manner, it may be possible to better achieve a balance between considerations relating to data throughput and data decoding accuracy.

In variant embodiments, data that is decoded from a color that has been detected for a given subarea may be dependent on the spatial position of the particular subarea on the display of the transmitting computing device. For example, a red color in one sub-area located in one physical region of the display may be mapped into a different multi-level word than a red color in another sub-area located on a different physical region of the display.

It will be appreciated that various example embodiments described herein relate to transmission of data using emission of light from a transmitting computing device and the capture of the emitted light at a recipient computing device. In addition to security benefits provided by encoding based on the first encoding code and/or encoding based on the second encoding code, transmission of data based on emission of light can provide an additional security benefit in that light may be emitted in a more focused manner than radio frequency waves. In particular, the proper capture of emitted light at a device relies on a proper positioning of both the transmitting computing device and the recipient computing device, thereby making it more difficult for an emitted light signal to be intercepted, particularly in a surreptitious manner, without loss of quality.

Moreover, the hardware components required for implementing various example embodiments described herein may be readily found on modern mobile devices. It will be appreciated that a light emitting unit can be provided from the flash sub-unit of a camera module, or a display. An image capture device can be readily provided from the camera unit of such devices.

Some of the acts of one or more methods described herein may be provided as software instructions, stored on non-transitory computer-readable storage media and executable by a microprocessor. Examples of non-transitory computer-readable storage media may include a hard disk, a floppy disk, an optical disk (e.g. a compact disk, a digital video disk), a flash drive or flash memory, magnetic tape, and memory. Other configurations are possible as well.

In variant implementations, some of the acts of one or more methods described herein may be provided as executable software instructions stored in transmission media.

As used herein, the wording "and/or" is intended to represent an inclusive-or. That is, "X and/or Y" is intended to mean X or Y or both. Moreover, "X, Y, and/or Z" is intended to mean X or Y or Z or any combination thereof.

As used herein, the wording "at least one of the following" followed by a plurality of elements is intended to cover any one or more of the elements, including any one of the elements alone, any sub-combination of the elements, or all of the elements, without necessarily excluding any additional elements, and without necessarily requiring all of the elements.

While the above description provides examples of the embodiments, it will be appreciated that some features and/or functions of the described embodiments are susceptible to modification without departing from the scope of the invention as defined by the claims. Accordingly, what has been described above has been intended to be illustrative and non-limiting and it will be understood by persons skilled in the art that other variants and modifications may be made without departing from the scope of the invention as defined in the claims appended hereto.

**Claims**

1. A method for transmitting data using a light emitting unit (176) of a transmitting device (100), the light emitting unit comprising a display (110), the method comprising:

applying (170) an encoding (304, 416) to the data, using at least one device identifier;
generating (174) a plurality of color identifiers by applying a color mapping (424) to the data, wherein each color identifier is associated with one of a plurality of color values;
defining (440) at least one image frame to be displayed on the display (110), each of the at least one image frame comprising a plurality of sub-areas;
for each of the plurality of color identifiers, associating (444) a color identified by the color identifier to one of the plurality of sub-areas of the at least one image frame;

transmitting at least one light signal based on the plurality of color identifiers, wherein transmitting the at least one light signal comprises displaying (448) the at least one frame on the display, each of the plurality of sub-areas of the at least one frame comprising the color associated with the sub-area; and

transmitting at least one pilot signal within a transmission of the at least one light signal, and in response to transmitting the at least one pilot signal to a recipient device, receiving a quality indicator from the recipient device, the quality indicator providing continuous feedback to the transmitting device based on whether the recipient device has successfully identified the pilot signal, wherein a size of each sub-area of the plurality of sub-areas is configured so as to dynamically change based on the continuous feedback from the recipient device.

2. The method according to claim 1, wherein the at least one device identifier comprises at least one of the following: at least one identifier of the transmitting device that is unique to the transmitting device, or at least one identifier of a recipient device that is unique to the recipient device.

3. The method according to any one of claims 1 or 2, further comprising;
formatting (412) the data to be transmitted into a plurality of multi-level words, prior to applying the color mapping.

4. The method according to any one of claims 1 to 3, wherein the encoding (304) is applied to the plurality of multi-level words.

5. The method according to any one of claims 1 to 4, further comprising:
defining at least one transmission parameter selected from the following group: at least one color value from a set of color values represented in the plurality of color values, a correspondence of values of the plurality color values to data values of the data, at least one pilot signal to be transmitted, or a frame rate.

6. The method according to any one of claims 1 to 5, wherein the data comprises at least a first data sub-sequence (904, 908, 912) and a second data sub-sequence (904, 908, 912), and further comprising:

mapping the first data sub-sequence to a first sub-sequence of color identifiers (916, 920, 924);
mapping the second data sub-sequence to a second sub-sequence of color identifiers (916, 920, 924);
applying (170a, 170b, 170c) an encoding to the first data sub-sequence based on an identifier of a first intended recipient device; and
applying (170a, 170b, 170c) a different encoding to the second data sub-sequence based on an identifier of a second intended recipient device;
wherein the at least one signal transmitted via the display (110) of the light emitting unit (176) of the transmitting device (100) is based on the first and second sub-sequences of color identifiers.

7. The method according to any one of claims 1 to 6, further comprising:
encrypting the color identifiers prior to transmitting the data.

8. A transmitting device (100) comprising:

a light emitting unit (176); and
a controller (102) communicatively coupled to the light emitting unit, the controller being configured to carry out the method according to any preceding claim.

9. A method for receiving data using a light capturing unit (500) of a recipient device (100), the light capturing unit comprising a camera unit (148), the method comprising:

controlling the light capturing unit to capture a light signal emitted by a transmitting device, wherein the light signal comprises at least one multi-dimensional image (488) frame transmitted via a display (110) and further comprises at least one pilot signal;
determining (504) a plurality of color identifiers by identifying different sized, dynamically changing, sub-areas (492) of the at least one multi-dimensional image frame and the color of each identified sub-area, and extracting the plurality of color identifiers from the identified colors of the sub-areas;
generating (512) data by determining a data value corresponding to the color value defined by each of the color identifiers of the plurality of color identifiers;
applying (516) a decoding (513) to the data, using at least one device identifier;
generating a quality indicator, wherein the quality indicator is generated in response to capturing the at least one pilot signal from the transmitting device; and
transmitting, from the light capturing unit to the transmitting device, the quality indicator so as to provide continuous feedback to the transmitting device based on whether the at least one pilot signal captured has been successfully identified by the light capturing unit, wherein the size of each sub-area dynamically changes, based on the continuous feedback.

10. The method according to claim 9, wherein the at least one device identifier comprises at least one of the following: at least one identifier of the recipient device that is unique to the recipient device, or at least one identifier of the transmitting device that is unique to the transmitting device.

11. The method according to any one of claims 9 or 10, further comprising:
generating a plurality of multi-level words, prior to generating the data, and wherein the data is generated from a demapping of the plurality of multi-level words.

12. A recipient device (100) comprising:

a light capturing unit (148); and
a controller (102) communicatively coupled to the light capturing unit, the controller being configured to carry out the method according to any one of claims 9 to 11.

**Patentansprüche**

1. Verfahren zum Übertragen von Daten unter Verwendung einer lichtemittierenden Einheit (176) einer Übertragungsvorrichtung (100), wobei die lichtemittierende Einheit eine Anzeigevorrichtung (110) aufweist, wobei das Verfahren aufweist:

Anwenden (170) einer Kodierung (304, 416) auf die Daten unter Verwendung mindestens eines Vorrichtungsidentifikators;
Erzeugen (174) einer Mehrzahl von Farbidentifikatoren durch Anwenden einer Farbzuordnung (424) auf die Daten, wobei jeder Farbidentifikator mit einem von einer Mehrzahl von Farbwerten assoziiert wird;
Definieren (440) von mindestens einem auf der Anzeigevorrichtung (110) anzuzeigenden Bildrahmen, wobei jeder des mindestens einen Bildrahmens eine Mehrzahl von Teilbereichen aufweist;
für jeden der Mehrzahl von Farbidentifikatoren Assoziieren (444) einer durch den Farbidentifikator identifizierten Farbe mit einem der Mehrzahl von Teilbereichen des mindestens einen Bildrahmens;
Übertragen von mindestens einem Lichtsignal auf Grundlage der Mehrzahl von Farbidentifikatoren, wobei das Übertragen des mindestens einen Lichtsignals das Anzeigen (448) des mindestens einen Rahmens auf der Vorrichtung aufweist, wobei jeder der Mehrzahl von Teilbereichen des mindestens einen Rahmens die dem Teilbereich zugeordnete Farbe aufweist; und
Übertragen von mindestens einem Pilotsignal innerhalb einer Übertragung des mindestens einen Lichtsignals und als Reaktion auf das Übertragen des mindestens einen Pilotsignals an eine Empfängervorrichtung Empfangen eines Qualitätsindikators von der Empfängervorrichtung, wobei der Qualitätsindikator eine kontinuierliche Rückmeldung an die Übertragungsvorrichtung basierend darauf bereitstellt, ob die Empfängervorrichtung das Pilotsignal erfolgreich identifiziert hat, wobei eine Größe jedes Teilbereichs der Mehrzahl von Teilbereichen so ausgelegt ist, dass er sich auf Grundlage der kontinuierlichen Rückmeldung von der Empfängervorrichtung dynamisch ändert.

2. Verfahren nach Anspruch 1, wobei der mindestens eine Vorrichtungsidentifikator mindestens einen der folgenden aufweist: mindestens einen Identifikator der Übertragungsvorrichtung, der für die Übertragungsvorrichtung eindeutig ist, oder mindestens einen Identifikator einer Empfängervorrichtung, der für die Empfängervorrichtung eindeutig ist.

3. Verfahren nach einem der Ansprüche 1 oder 2, das ferner aufweist:
Formatieren (412) der zu übertragenden Daten in eine Mehrzahl von mehrstufigen Wörtern vor Anwendung der Farbzuordnung.

4. Verfahren nach einem der Ansprüche 1 bis 3, wobei die Kodierung (304) auf die Mehrzahl von mehrstufigen Wörtern angewendet wird.

5. Verfahren nach einem der Ansprüche 1 bis 4, das ferner aufweist:
Definieren von mindestens einem Übertragungsparameter, der aus der folgenden Gruppe ausgewählt ist: mindestens einem Farbwert aus einem Satz von Farbwerten, die in der Mehrzahl von Farbwerten dargestellt sind, einer Übereinstimmung von Werten der Mehrzahl von Farbwerten mit Datenwerten der Daten, mindestens einem zu übertragenden Pilotsignal oder einer Bildfrequenz.

6. Verfahren nach einem der Ansprüche 1 bis 5, wobei die Daten mindestens eine erste Datenteilsequenz (904, 908, 912) und eine zweite Datenteilsequenz (904, 908, 912) aufweisen, und das ferner aufweist:

Zuordnen der ersten Datenteilsequenz zu einer ersten Teilsequenz von Farbidentifikatoren (916, 920, 924);

Zuordnen der zweiten Datenteilsequenz zu einer zweiten Teilsequenz von Farbidentifikatoren (916, 920, 924);

Anwenden (170a, 170b, 170c) einer Kodierung auf die erste Datenteilsequenz auf Grundlage eines Identifikators einer ersten bestimmungsgemäßen Empfängervorrichtung; und

Anwenden (170a, 170b, 170c) einer anderen Kodierung auf die zweite Datenteilsequenz auf Grundlage eines Identifikators einer zweiten bestimmungsgemäßen Empfängervorrichtung;

wobei das mindestens eine Signal, das über die Anzeigevorrichtung (110) der lichtemittierenden Einheit (176) der Übertragungsvorrichtung (100) übertragen wird, auf der ersten und der zweiten Teilsequenz von Farbidentifikatoren basiert.

7. Verfahren nach einem der Ansprüche 1 bis 6, das ferner aufweist:
Verschlüsseln der Farbidentifikatoren vor dem Übertragen der Daten.

8. Übertragungsvorrichtung (100), die aufweist:

eine lichtemittierende Einheit (176); und
eine Steuerung (102), die kommunikativ mit der lichtemittierenden Einheit gekoppelt ist, wobei die Steuerung dazu ausgelegt ist, das Verfahren nach einem der vorhergehenden Ansprüche auszuführen.

9. Verfahren zum Empfangen von Daten unter Verwendung einer Lichterfassungseinheit (500) einer Empfängervorrichtung (100), wobei die Lichterfassungseinheit eine Kameraeinheit (148) aufweist, wobei das Verfahren aufweist:

Steuern der Lichterfassungseinheit so, dass sie ein von einer Übertragungsvorrichtung emittiertes Lichtsignal erfasst, wobei das Lichtsignal mindestens einen Rahmen eines mehrdimensionalen Bildes (488) aufweist, der über eine Anzeigevorrichtung (110) übertragen wird, und ferner mindestens ein Pilotsignal aufweist;

Bestimmen (504) einer Mehrzahl von Farbidentifikatoren durch Identifizieren von unterschiedlich großen, sich dynamisch ändernden Teilbereichen (492) des mindestens einen mehrdimensionalen Bildrahmens und der Farbe jedes identifizierten Teilbereichs, und Extrahieren der Mehrzahl von Farbidentifikatoren aus den identifizierten Farben der Teilbereiche;

Erzeugen (512) von Daten durch Bestimmen eines Datenwerts, der dem Farbwert entspricht, der durch jeden der Farbidentifikatoren der Mehrzahl von Farbidentifikatoren definiert ist;

Anwenden (516) einer Dekodierung (513) auf die Daten unter Verwendung von mindestens einem Vorrichtungsidentifikator;

Erzeugen eines Qualitätsindikators, wobei der Qualitätsindikator als Reaktion auf das Erfassen des mindestens einen Pilotsignals von der Übertragungsvorrichtung erzeugt wird; und

Übertragen des Qualitätsidentifikators von der Lichterfassungseinheit an die Übertragungsvorrichtung, um der Übertragungsvorrichtung eine kontinuierliche Rückmeldung basierend darauf zu liefern, ob das mindestens eine erfasste Pilotsignal von der Lichterfassungseinheit erfolgreich identifiziert wurde, wobei sich die Größe jedes Teilbereichs auf Grundlage der kontinuierlichen Rückmeldung dynamisch ändert.

10. Verfahren nach Anspruch 9, wobei der mindestens eine Vorrichtungsidentifikator mindestens einen der folgenden aufweist: mindestens einen Identifikator der Empfängervorrichtung, der für die Empfängervorrichtung eindeutig ist, oder mindestens einen Identifikator der Übertragungsvorrichtung, der für die Übertragungsvorrichtung eindeutig ist.

11. Verfahren nach einem der Ansprüche 9 oder 10, das ferner aufweist:
Erzeugen einer Mehrzahl von mehrstufigen Wörtern vor dem Erzeugen der Daten, wobei die Daten aus einer Auflösung der Zuordnung der Mehrzahl von mehrstufigen Wörtern erzeugt werden.

12. Empfängervorrichtung (100), die aufweist:

eine Lichterfassungseinheit (148); und
eine Steuerung (102), die kommunikativ mit der Lichterfassungseinheit gekoppelt ist, wobei die Steuerung dazu ausgelegt ist, das Verfahren nach einem der Ansprüche 9 bis 11 auszuführen.

**Revendications**

1. Procédé pour émettre des données à l'aide d'une unité d'émission de lumière (176) d'un dispositif d'émission (100), l'unité d'émission de lumière comprenant un dispositif d'affichage (110), le procédé comprenant :

appliquer (170) un codage (304, 416) aux données, à l'aide d'au moins un identificateur de dispositif ;
générer (174) une pluralité d'identificateurs de couleur par application d'un mappage de couleur (424) aux données, chaque identificateur de couleur étant associé à l'une d'une pluralité de valeurs de couleur ;

définir (440) au moins une trame d'image à afficher sur le dispositif d'affichage (110), chacune de l'au moins une trame d'image comprenant une pluralité de sous-zones ;

pour chacun de la pluralité d'identificateurs de couleur, associer (444) une couleur identifiée par l'identificateur de couleur à l'une de la pluralité de sous-zones de l'au moins une trame d'image ;

émettre au moins un signal lumineux sur la base de la pluralité d'identificateurs de couleur, l'émission de l'au moins un signal lumineux comprenant l'affichage (448) de l'au moins une trame sur le dispositif d'affichage, chacune de la pluralité de sous-zones de l'au moins une trame comprenant la couleur associée à la sous-zone ; et

émettre au moins un signal pilote dans une émission de l'au moins un signal lumineux, et en réponse à l'émission de l'au moins un signal pilote à un dispositif destinataire, recevoir un indicateur de qualité à partir du dispositif destinataire, l'indicateur de qualité fournissant une rétroaction continue au dispositif d'émission sur la base du point de savoir si le dispositif destinataire a ou non identifié avec succès le signal pilote, une taille de chaque sous-zone de la pluralité de sous-zones étant configurée de façon à changer de manière dynamique sur la base de la rétroaction continue provenant du dispositif destinataire.

2. Procédé selon la revendication 1, dans lequel l'au moins un identificateur de dispositif comprend au moins l'un des identificateurs suivants : au moins un identificateur du dispositif d'émission qui est propre au dispositif d'émission, ou au moins un identificateur d'un dispositif destinataire qui est propre au dispositif destinataire.

3. Procédé selon l'une quelconque des revendications 1 ou 2, comprenant en outre :
formater (412) les données à émettre en une pluralité de mots multi-niveau, avant l'application du mappage de couleur.

4. Procédé selon l'une quelconque des revendications 1 à 3, dans lequel le codage (304) est appliqué à la pluralité de mots multi-niveau.

5. Procédé selon l'une quelconque des revendications 1 à 4, comprenant en outre :
définir au moins un paramètre d'émission sélectionné à partir du groupe suivant : au moins une valeur de couleur provenant d'un ensemble de valeurs de couleur représentées dans la pluralité de valeurs de couleur, une correspondance de valeurs de la pluralité de valeurs de couleur avec des valeurs de données des données, au moins un signal pilote à émettre, ou une fréquence de trames.

6. Procédé selon l'une quelconque des revendications 1 à 5, dans lequel les données comprennent au moins une première sous-séquence de données (904, 908, 912) et une seconde sous-séquence de données (904, 908, 912), et comprenant en outre :

mapper la première sous-séquence de données à une première sous-séquence d'identificateurs de couleur (916, 920, 924) ;
mapper la seconde sous-séquence de données à une seconde sous-séquence d'identificateurs de couleur (916, 920, 924) ;
appliquer (170a, 170b, 170c) un codage à la première sous-séquence de données sur la base d'un identificateur d'un premier dispositif destinataire prévu ; et
appliquer (170a, 170b, 170c) un codage différent à la seconde sous-séquence de données sur la base d'un identificateur d'un second dispositif destinataire prévu ;
l'au moins un signal émis par l'intermédiaire du dispositif d'affichage (110) de l'unité d'émission de lumière (176) du dispositif d'émission (100) étant basé sur les première et seconde sous-séquences d'identificateurs de couleur.

7. Procédé selon l'une quelconque des revendications 1 à 6, comprenant en outre :
chiffrer les identificateurs de couleur avant l'émission des données.

8. Dispositif d'émission (100) comprenant :

une unité d'émission de lumière (176) ; et
un dispositif de commande (102) couplé, de façon à pouvoir communiquer, à l'unité d'émission de lumière, le dispositif de commande étant configuré pour réaliser le procédé selon une quelconque revendication précédente.

9. Procédé pour recevoir des données à l'aide d'une unité de capture de lumière (500) d'un dispositif destinataire (100), l'unité de capture de lumière comprenant une unité de caméra (148), le procédé comprenant :

amener l'unité de capture de lumière à capturer un signal lumineux émis par un dispositif d'émission, le signal lumineux comprenant au moins une trame d'image multidimensionnelle (488) émise par l'intermédiaire d'un dispositif d'affichage (110) et comprenant en outre au moins un signal pilote ;
déterminer (504) une pluralité d'identificateurs de couleur par identification de sous-zones (492) de différentes tailles, à changement dynamique, de l'au moins une trame d'image multidimensionnelle et la couleur de chaque sous-zone identifiée, et extraire la pluralité d'identificateurs de couleur à partir des couleurs identifiées des sous-zones ;

générer (512) des données par détermination d'une valeur de données correspondant à la valeur de couleur définie par chacun des identificateurs de couleur de la pluralité d'identificateurs de couleur ;

appliquer (516) un décodage (513) aux données, à l'aide d'au moins un identificateur de dispositif ;

générer un indicateur de qualité, l'indicateur de qualité étant généré en réponse à la capture de l'au moins un signal pilote à partir du dispositif d'émission ; et

émettre, de l'unité de capture de lumière au dispositif d'émission, l'indicateur de qualité de façon à fournir une rétroaction continue au dispositif d'émission sur la base du point de savoir si l'au moins un signal pilote capturé a ou non été identifié avec succès par l'unité de capture de lumière.

10. Procédé selon la revendication 9, dans lequel l'au moins un identificateur de dispositif comprend au moins l'un des identificateurs suivants : au moins un identificateur du dispositif destinataire qui est propre au dispositif destinataire, ou au moins un identificateur du dispositif d'émission qui est propre au dispositif d'émission.

11. Procédé selon l'une quelconque des revendications 9 ou 10, comprenant en outre :
générer une pluralité de mots multi-niveau, avant la génération des données, et dans lequel les données sont générées à partir d'une extraction de la pluralité de mots multi-niveau.

12. Dispositif destinataire (100) comprenant :

une unité de capture de lumière (148) ; et
un dispositif de commande (102) couplé, de façon à pouvoir communiquer, à l'unité de capture de lumière, le dispositif de commande étant configuré pour réaliser le procédé selon l'une quelconque des revendications 9 à 11.

**FIG. 1**

**FIG. 2**

**FIG. 3**

To-be-transmitted data — 300

First encoding module — 170

First encoding code — 304

Second encoding module — 172

Second encoding code — 312

Color mapping module — 174

Handshaking module — 308

Light signal generating Module — 176

FIG. 4

FIG. 5

400

404 — Receive data to be transmitted

408 — Handshake with the intended recipient device

412 — Format the data to plurality of multi-level words

416 — Encode the data using first encoding code

420 — Encode the data using second encoding code

424 — Map the data to colour identifiers

428 — Generate a display control signal based on color identifiers

432 — Display a light emitting signal based on the display control signal

FIG. 6

428

| Define sub-areas of at least one image frame | 440 |

| Associate a color identifier to each sub-area | 444 |

| Generate display control signal | 448 |

FIG. 7

300

Data Sequence:
0111011110011010101010011

Binary to multi-level

476

Multi-level Words:
011|101|111|001|101|010|110|011

Symbol to Color ID mapping

484

Color Identifiers:

00FFFF| FF00FF| FFFFFF| 0000FF| FF00FF| 00FF00| FFFF00| 00FFFF

| Cyan | Magenta | White | Blue |
|------|---------|-------|------|
| Cyan | Yellow | Green | Magenta |

492

488

492

480

000=000000 (Black)
001=0000FF (Blue)
010=00FF00 (Green)
011=00FFFF (Cyan)
100=FF0000 (Red)
101=FF00FF(Magenta)
110=FFFF00 (Yellow)
111=FFFFFF (White)

FIG. 8

300 → Data Sequence:
0111011110011010101100011

Binary to multi-level (QAM)

476 → Multi-level QAM Word:
A1P4|A2P2|A2P4|A1P2|A2P2|A1P3|A2P3|A1P4

Symbol to Color ID Mapping

484 → Color Identifiers:

00FFFF| FF00FF| FFFFFF| 0000FF| FF00FF| 00FF00| FFFF00| 00FFFF

| Cyan | Magenta | White | Blue |
|------|---------|-------|------|
| Cyan | Yellow | Green | Magenta |

492

488

492

496

| 000=A1P1 | A1P1=000000 (Black) |
| 001=A1P2 | A1P2=0000FF (Blue) |
| 010=A1P3 | A1P3=00FF00 (Green) |
| 011=A1P4 | A1P4=00FFFF (Cyan) |
| 100=A2P1 | A2P1=FF0000 (Red) |
| 101=A2P2 | A2P2=FF00FF (Magenta) |
| 110=A2P3 | A2P3=FFFF00 (Yellow) |
| 111=A2P4 | A2P4=FFFFFF (White) |

FIG. 9

FIG. 10

## FIG. 11

600

Handshake with transmitting
device                                    604

↓

Capture light signal                      608

↓

Generate color identifiers                612

↓

Map the color identifiers to data         616

↓

Decode data using second
decoding code                             620

↓

Decode data using
first decoding code                       624

FIG. 12

600'

604
Handshake with transmitting device

608
Capture frame(s) displayed on display of transmitting device

612
Generate color identifiers from identified colors

616
Map the color words to multi-level words

620
Decode data using second decoding code

624
Decode data using first decoding code

628
Map the decoded multi-level words to data

FIG.13

FIG. 14

# MACHINE-TO-MACHINE PIXEL MODULATING PROCESS

FIG. 15

MACHINE-TO-MACHINE PIXEL MODULATING PROCESS

FIG. 16

# MACHINE-TO-MACHINE
# PIXEL MODULATING PROCESS

EP 3 051 845 B1

FIG. 17

# MACHINE-TO-MACHINE
## (PIXEL DEMODULATING PROCESS)

524

```
00111100
01000010
10100101
10000001
10100101
10011001
01000010
00111100
```

516

904

513

PIN 1

Walsh Code

Mobile Camera
(Receiver)

500

110

Mobile Screen
(Transmitter)

508

512

504

509

Sender
PIN
Mobile

Color to
Multi-level

ISP/Video
Processor

Shift

FIG. 18

EP 3 051 845 B1

Section Of The Screen Not Used For Data Transfer

File Transfer To Another Mobile

Steganography Use For Secure Data Transfer

Video Clip

110

948

952

492

492

492

492

492

960

956

FIG. 19

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Short-Range Wireless Optical Communication Using Visible Light. *IEEE Standard for Local and metropolitan area networks,* 06 September 2011, 1-309

- **BAO XU et al.** Li-Fi: Light fidelity-a survey. Wireless Networks, ACM, 18 January 2015, vol. 21, 1879-1889